# FASCICULE DE BREVET EUROPEEN

(11) **EP 2 575 559 B1**
(45) Date de publication et mention de la délivrance du brevet: **02.04.2014**
(21) Numéro de dépôt: 11720789.4
(22) Date de dépôt: 23.05.2011
(51) Int. Cl.: A47J 31/00

(54) **GROUPE D'INFUSION POUR MACHINE DE PRODUCTION DE BOISSONS**
INFUSIONSEINHEIT FÜR EINE MASCHINE ZUR HERSTELLUNG VON GETRÄNKEN
INFUSION UNIT FOR A MACHINE FOR MAKING BEVERAGES

(30) Priorité: 25.05.2010 FR 1054006
(43) Date de publication de la demande: 10.04.2013
(73) Titulaire: Compagnie Méditerranéenne des Cafés, 06510 Carros (FR)
(72) Inventeur: BLANC, Jean-Pierre, F-06000 Nice (FR); GOERING, Alain, F-06000 Nice (FR)
(74) Mandataire: Hautier, Nicolas
(86) Numéro de dépôt international: PCT/EP2011/058389
(87) Numéro de publication internationale: WO 2011/147791

(56) Documents cités:
- WO-A1-2008/142040
- JP-A- 2 295 522
- US-A- 5 144 886

## Description

La présente invention concerne un groupe d'infusion avec ceinture de renforcement pour une machine de production de boissons par extraction d'un produit à infuser, cette ceinture comportant des moyens de réception pour au moins un élément à insérer dans le groupe, ce groupe étant solidarisé avec une partie constitutive de la machine, de préférence de manière amovible.

Elle trouve plus particulièrement son application dans le domaine des machines à café de type EXPRESSO. Elle pourra également s'appliquer à la production de boissons à partir d'autres matières telles que le thé. Elle trouvera pour application particulière le domaine des machines de production de boissons par infusion d'un produit contenu dans une dose.

De manière connue, ces machines comprennent un groupe d'infusion assurant l'extraction d'un produit tel que le café. Un groupe d'infusion comporte habituellement une chambre d'extraction étanche lors de la phase d'extraction et apte à s'ouvrir pour recevoir ou libérer le produit servant à l'infusion. La sortie de la chambre débouche vers un récipient tel qu'une tasse.

L'un des systèmes d'infusion les plus courants a recours à une chambre d'extraction réalisée en deux parties, l'une étant fixe et l'autre rendue mobile. L'une des deux demi chambres comporte l'arrivée d'eau chaude sous pression tandis que l'autre présente un bec par lequel est distribué le café infusé depuis la dose contenue dans la chambre d'extraction. La pression d'infusion étant assurée par une pompe embarquée dans la machine, il est possible d'utiliser la pression hydraulique de cette même pompe pour assurer le déplacement de la demi chambre mobile en lui associant un vérin hydraulique afin d'assurer sa fermeture automatique en limitant l'effort humain. Une telle machine est connue par exemple du document WO-A- 2008/142040.

Dans de nombreuses machines, le groupe est fixé sur le bâti de la machine de manière non amovible. Son démontage est alors rendu très difficile voire impossible. Ceci est particulièrement désavantageux pour son nettoyage, sa maintenance ou son recyclage en fin de vie, en ne répondant pas aux exigences d'éco-conception qui imposent le démantèlement et le recyclage des parties constitutives de telles machines.

De plus et surtout, comme la réalisation d'un café expresso s'effectue par infusion d'une quantité prédéfinie de café torréfié et moulu avec de l'eau chaude à très haute pression au travers d'une chambre d'extraction préalablement fermée, plus la pression d'infusion est grande et plus l'effort de fermeture des deux demi chambres doit être important pour en assurer l'étanchéité pendant l'infusion.

L'effort important appliqué sur la demi chambre fixe et résultant de la pression des moyens d'entraînement de la demi chambre mobile entraîne en réaction un effort tout aussi important mais de sens contraire sur ces moyens d'entraînement. Ces deux efforts opposés doivent impérativement être supportés par un élément mécanique correctement dimensionné pour éviter la destruction au moins partielle de la machine.

Compte tenu de la pression importante mise en jeu dans les machines à café expresso domestique, jusqu'à 20 bars, l'élément mécanique enserrant les moyens d'entraînement de la chambre mobile, ceux-ci étant fréquemment sous la forme d'un vérin, ainsi que les deux demi chambres d'infusion et supportant les efforts résultants est couramment réalisé à partir de l'assemblage complexe de plusieurs éléments métalliques de forte section, généralement en acier. Ces différents éléments sont soumis à une corrosion, en étant de plus volumineux et lourds ce qui conduit à un volume minimal important pour l'ensemble de la machine, au détriment de son coût économique ainsi qu'à son impact sur l'environnement tant en prélèvement de ressource naturelle qu'en quantité d'énergie nécessaire à sa fabrication et sa distribution.

Ainsi, il existe un besoin de concevoir un groupe d'infusion résistant à la pression tout en étant moins volumineux et moins lourd que ceux proposés dans l'état de la technique.

Il existe aussi un second besoin de concevoir une mise en place d'au moins un élément à insérer dans le groupe qui soit facile à effectuer, cet élément pouvant être, par exemple, la ou les demi chambres fixe et/ou mobile ainsi que les moyens d'entraînement de la demi chambre mobile et aussi des dispositifs auxiliaires de guidage de la dose ou de fermeture et/ou ouverture séquentielle des demi chambres.

La présente invention vise à satisfaire au moins l'un de ces besoins.

A cet effet, on prévoit selon l'invention un groupe d'infusion pour machine de production de boissons par extraction d'un produit à infuser sous forme d'une dose, ce groupe formant un espace intérieur creux recevant des éléments insérés comprenant au moins une demi chambre fixe et une autre demi chambre en vis à vis, ces deux demi chambres en position appliquée l'une contre l'autre formant la chambre d'extraction, ainsi que des moyens d'entraînement de la chambre mobile entre une position appliquée contre ladite autre demi chambre et une position à distance de cette autre demi chambre, caractérisé en ce qu'il comporte une ceinture de renforcement délimitant son espace intérieur creux, cette ceinture comprenant des moyens de reprise des efforts générés lors de l'infusion sur au moins un élément inséré, la ceinture de renforcement comprenant en outre des moyens de réception pour chacun desdits éléments.

L'effet technique obtenu est tout d'abord d'effectuer un maintien d'au moins un élément inséré dans un groupe d'infusion qui soit efficace et qui évite un endommagement possible de cet élément et même d'autres parties de la machine en fonctionnement dans le groupe et ensuite de permettre une insertion rapide de l'élément dans le groupe, avec des moyens spécifiquement adaptés aux caractéristiques de l'élément. Ceci procure en outre une facilité de maintenance ainsi qu'une possibilité de démantèlement en fin de vie de la machine portant ce groupe à un coût raisonnable.

Il est ainsi éventuellement possible de remplacer des éléments métalliques volumineux pour le maintien et le renforcement d'au moins un élément inséré dans un groupe par une seule pièce monobloc et compacte, de préférence en plastique, réalisée par exemple par injection et correctement dimensionnée pour supporter les efforts générés lors de l'infusion.

La machine selon l'invention a également pour avantage de présenter une facilité de démontage de sa partie constitutive portant le groupe d'infusion dans le but de son nettoyage, de sa maintenance et/ou pour son démantèlement en fin de vie.

De manière facultative, l'invention comprend en outre au moins l'une quelconque des caractéristiques suivantes :
- les moyens de reprise des efforts sont au moins une nervure de renforcement, disposée sur au moins une des faces de la ceinture sur son pourtour extérieur, cette nervure s'étendant dans la longueur de ladite face de la ceinture. Cette ou ces nervures procurent un surcroît de section transversale de la ceinture avantageux pour réduire les contraintes induites sur la ceinture.
- ladite autre demi chambre est fixe par rapport à la ceinture. Alternativement, elle peut comprendre une mobilité, par exemple pour compléter le mouvement de rapprochement effectué par la demi chambre mobile et assurer l'étanchéité de la chambre d'extraction.
- plusieurs nervures sont prévues pour la face de la ceinture, ces nervures s'étendant parallèlement. On obtient ainsi un ensemble étagé de nervures réparti sur au moins une face de la ceinture.
- les nervures présentent une épaisseur égale à celle de la paroi de la ceinture les portant. Ceci est suffisant pour leur permettre de remplir leur rôle de moyens de reprise des efforts en procurant plus d'inertie à la ceinture afin de limiter ses déformations sous charge et facilite aussi la fabrication, notamment par moulage de la ceinture présentant de telles nervures.
- selon la fonction de leur élément inséré associé, les moyens de réception peuvent être des moyens de fixation amovible, des moyens permettant le déplacement à l'intérieur du groupe ou des moyens de support dudit élément. Ainsi, on obtient un maintien ou un support d'un élément spécifiquement adapté à cet élément.
- les moyens d'entraînement sont regroupés dans un corps présentant sur chacune de ses parties latérales deux portions en saillie formant un intervalle entre elles destiné à recevoir respectivement un rail de coulissement porté par l'espace intérieur du groupe d'infusion délimité par la ceinture, ces rails formant les premiers moyens de réception pour les moyens d'entraînement. Ceci présente l'avantage de former un ensemble compact d'entraînement et de ne pas nécessiter des moyens de réception pour chaque élément contenu dans le corps. De plus, avec une telle disposition, un déplacement vertical du corps est rendu impossible, déplacement qui pourrait survenir du fait de la pression hydraulique à laquelle est soumis en général le corps. L'utilisation de rail représente un guidage en position avantageux lors de la mise en place du corps et permet une répartition des efforts sur une plus grande longueur de la ceinture.
- la face du corps opposée à celle en vis à vis de la demi chambre fixe et adjacente aux deux faces latérales est en appui contre une face intérieure de la ceinture. Ainsi, il est obtenu un contact entre corps et ceinture sur une grande partie de la ceinture avec une sollicitation pour la reprise des efforts de toute ladite partie plutôt qu'une sollicitation ponctuelle.
- la partie avant du corps sur chacun de ses côtés latéraux est supportée par un ergot porté par l'espace intérieur délimité par la ceinture, ces ergots formant les seconds moyens de réception pour ces moyens d'entraînement,
- le corps comprend une pièce annulaire l'entourant au moins partiellement et s'encliquetant sur chacun desdits ergots,
- l'encliquetage de la pièce annulaire met en précompression un moyen de rappel des moyens d'entraînement permettant le retour des moyens d'entraînement à partir de la position appliquée de la demi chambre mobile contre la demi chambre fixe. Ces trois dernières caractéristiques permettent un meilleur support du corps dans la ceinture et la dernière caractéristique, tout en procurant des seconds moyens de réception, permet de mettre en fonction un moyen compris dans le corps simultanément au montage dudit corps sur la ceinture.
- les moyens d'entraînement comprennent un vérin. Ce moyen est un des plus adaptés pour le déplacement d'une demi chambre mobile.
- la demi chambre mobile et ses moyens d'entraînement sont regroupés dans le corps, la demi chambre mobile conservant une liberté de déplacement dans la longueur de ce corps. Ainsi, on obtient un corps compact nécessitant moins de moyens de réception que les éléments insérés un à un.
- la demi chambre fixe comporte sur sa face arrière, opposée à celle en vis à vis de la demi chambre mobile, une plaque de support, cette plaque comportant des évidements coopérant avec des plots prévus sur une face frontale intérieure de la ceinture de renforcement, ces plots formant les moyens de réception de la ceinture pour la demi chambre fixe. La fixation de la demi chambre fixe est donc opposée au corps et les moyens d'entraînement de la demi chambre mobile plaque la demi chambre mobile contre sa fixation empêchant ainsi à celle-ci de se défaire intempestivement.
- les éléments insérés dans l'espace interne du groupe comprennent un dispositif de fermeture amont et aval des demi chambres mobile et fixe, ce dispositif étant supporté par un ensemble fixe destiné à être fixé à la ceinture, cet ensemble fixe comportant des moyens de guidage de la dose à infuser, un téton étant disposé sur chaque partie latérale de l'élément fixe, le téton étant, en position montée de cet ensemble fixe dans le groupe d'infusion, en vis à vis avec une excroissance de la partie latérale de la ceinture présentant une lumière pour son insertion, ces lumières formant les moyens de réception pour la fixation de l'ensemble fixe sur la ceinture. La présence d'un tel dispositif de fermeture dans le groupe est avantageux pour le bon fonctionnement de l'admission et de l'évacuation de la chambre d'extraction. Bien qu'avantageux, le dispositif de fermeture est optionnel dans le cadre de l'invention.
- le dispositif de fermeture présente un coulisseau sur chacun de ses côtés latéraux, ce coulisseau coopérant avec un rail de guidage prévu sur chaque face latérale de l'ensemble fixe supportant le dispositif de fermeture amont et aval de la chambre d'extraction. Le dispositif de fermeture vient trouver sa place contre les renforts latéraux internes de la ceinture dont la forme augmente la section transversale et son inertie géométrique, ce qui permet, de répartir les efforts exercés sur une plus grande partie de la ceinture..
- le dispositif de fermeture se positionne en appui pour chacun de ses côtés latéraux, sur un renfort latéral prévu sur chaque face latérale interne de la ceinture, ces renforts latéraux permettant d'augmenter localement la section transversale de la ceinture et son inertie géométrique pour en assurer sa tenue mécanique.
- le groupe comprend des moyens de verrouillage du groupe pour sa fixation à l'intérieur de la machine et des moyens d'actionnement du verrouillage et/ou d'insertion dans ou de séparation du groupe d'une partie constitutive de la machine. L'avantage procuré par la présence de moyens d'actionnement pour l'activation du verrouillage ou du déverrouillage des moyens de verrouillage est que ces moyens d'actionnement peuvent être rendus plus facilement accessibles à un opérateur que ne le seraient les moyens de verrouillage qui sont principalement logés entre groupe d'infusion et réceptacle et donc difficiles d'accès Ceci présente l'avantage d'avoir un système de verrouillage sûr et économique pour le verrouillage ou déverrouillage du groupe d'infusion, ce système étant simple de réalisation. La double fonction des moyens d'actionnement du verrouillage faisant aussi office de moyens de transport du groupe est aussi avantageuse.
- la ceinture périphérique porte de manière symétrique les moyens de verrouillage, les moyens de verrouillage étant reçus dans un logement sur chaque face latérale externe de la ceinture et coulissant latéralement à la ceinture sur ladite face latérale externe, les moyens de verrouillage comprenant des reliefs complémentaires aux nervures de renforcement de la ceinture et configurés pour assurer le guidage en translation des moyens de verrouillage sur la ceinture. Ainsi, les nervures en plus de leur fonction de renforcement de la ceinture peuvent avoir une seconde fonction, ce qui permet d'obtenir deux fonctions avec un même élément.
- les moyens d'actionnement sont agencés pour que dans leur position de désactivation, les moyens de verrouillage empêchent la désolidarisation du groupe par rapport au réceptacle et que dans leur position d'activation, les moyens de verrouillage autorisent la désolidarisation du groupe par rapport à la partie constitutive de la machine,
- les moyens d'actionnement sont portés par le groupe et comprennent un élément de commande manuel tel qu'une poignée ou un bouton destiné à être tiré, pressé ou tourné, ledit élément de commande étant articulé sur le groupe et configuré pour participer, au moins en partie, à la préhension du groupe en vue de son insertion dans ou de sa séparation de la partie constitutive de la machine. Un élément de commande sous la forme d'une poignée ou d'un bouton permet à l'opérateur une facilité d'actionnement des moyens de verrouillage.
- l'élément de commande est une poignée configurée pour se déplacer lors de son actionnement et coopérant avec les moyens de verrouillage associés de sorte que le déplacement de la poignée entraîne un déplacement des moyens de verrouillage,
- la poignée est montée coulissante sur le groupe et configurée de sorte qu'un coulissement de la poignée entraîne un coulissement des moyens de verrouillage associés selon une direction perpendiculaire à celle de la poignée. Ceci présente l'avantage de pouvoir permettre un coulissement des moyens de verrouillage dans un plan horizontal tandis que la poignée coulisse dans un plan vertical, ce qui est le coulissement le plus adapté pour une poignée.
- il est prévu au dessus du logement un montant transversal avec un ergot, le logement et le montant formant les moyens de réception du bras de l'élément de commande sur l'extérieur de la ceinture,
- un organe de préhension est fixé au groupe et conformé de sorte qu'un utilisateur puisse appréhender simultanément et avec une même main l'élément de commande et l'organe de préhension.
- le groupe est agencé de sorte qu'une pression appliquée sur l'élément de commande autorise la désolidarisation du groupe par rapport à la partie constitutive de la machine et qu'une traction exercée sur l'élément de commande et l'organe de préhension sépare le groupe de la partie constitutive de la machine. Ainsi, les moyens d'actionnement sont opérationnels par pression et les moyens d'enlèvement du groupe d'infusion du réceptacle sont opérationnels par traction, ces deux mouvements étant particulièrement appropriés pour un élément de commande tel qu'une poignée, le mouvement par traction étant aussi le mouvement le plus adéquat pour l'enlèvement du groupe d'infusion du réceptacle le recevant.

L'invention concerne aussi un réceptacle formant une partie constitutive de la machine comprenant dans son espace interne un tel groupe d'infusion, dans lequel il est prévu des moyens de verrouillage complémentaires aux moyens de verrouillage portés par le groupe d'infusion.

Avantageusement, les moyens de verrouillage du groupe et du réceptacle sont du type pêne porté par l'un entre le groupe et le réceptacle coopérant avec une gâche portée par l'autre.

Avantageusement, le réceptacle comprend au moins un connecteur hydraulique et le groupe comprend au moins un connecteur complémentaire pour assurer l'alimentation hydraulique du groupe et dans lequel les moyens de verrouillage sont répartis de part et d'autre des connecteurs en empêchant ainsi la rotation du groupe sous l'effet d'une pression du fluide alimentant ledit groupe. Ceci accroît la stabilité et la résistance du groupe d'infusion lors de l'alimentation hydraulique.

L'invention concerne aussi une machine de production de boissons par extraction d'un produit à infuser, comprenant un tel groupe ou un tel réceptacle.

L'invention concerne enfin un procédé d'assemblage d'au moins un élément dans un groupe d'infusion, caractérisé en ce qu'il comprend l'étape de montage de l'élément à l'intérieur d'une ceinture de renforcement encadrant l'espace intérieur du groupe, de telle manière que l'effort exercé sur cet élément soit transmis à la ceinture effectuant alors une reprise des efforts exercés sur l'élément.

L'invention a également pour objet une machine de préparation de boisson comprenant des moyens de réception d'un groupe d'extraction ou d'infusion et un circuit hydraulique comportant une pompe, le circuit hydraulique étant destiné à être connecté fluidiquement au groupe. La machine est agencée de sorte que la solidarisation du groupe aux moyens de réception provoque la connexion fluidique du groupe avec le circuit hydraulique. Ainsi, le montage du groupe sur la machine est obtenu de manière particulièrement simple. L'invention simplifie les montages existants qui nécessitent au moins une étape de solidarisation du groupe et des étapes de raccordement fluidique entre le circuit comprenant la pompe et le groupe.

De manière particulièrement avantageuse, les moyens de réception du groupe sont configurés pour permettre une désolidarisation amovible du groupe, et la machine est agencée de sorte que la désolidarisation du groupe par rapport aux moyens de réception supprime la connexion fluidique entre le groupe et le circuit hydraulique.

L'invention permet ainsi de démonter très facilement le groupe en vue de son nettoyage, de sa maintenance ou de son démantèlement par exemple.

De manière préférée, le circuit comprend au moins un connecteur fluidique et le groupe comprend au moins un connecteur fluidique complémentaire. La machine est configurée de sorte que l'insertion du groupe sur la machine entraîne la mise en coopération de l'au moins un connecteur fluidique avec l'au moins un connecteur fluidique complémentaire. Cette mise en coopération assure la connexion fluidique entre le circuit hydraulique et le groupe. De préférence cette mise en coopération est obtenu par emmanchement de l'au moins un connecteur fluidique avec l'au moins un connecteur fluidique complémentaire. De préférence cette mise en coopération est obtenue par un mouvement relatif de translation entre le groupe et le circuit hydraulique.

Ces caractéristiques peuvent être exploitées indépendamment des caractéristiques relatives à la ceinture de reprise des efforts.

Avantageusement, le procédé d'assemblage d'au moins un élément à insérer dans un tel groupe d'infusion comprend les étapes suivantes :
- on insère dans l'espace interne du groupe d'infusion les moyens d'entraînement de la demi chambre mobile, le cas échéant avec la demi chambre mobile quand celle-ci est regroupée avec les moyens d'entraînement, ceci dans une autre position dans l'espace interne que leur position définitive,
- on coulisse les moyens d'entraînement à l'intérieur de ce groupe dans leur position définitive en appui contre une face du groupe et on solidarise les moyens d'entraînement avec le groupe,
- on insère dans l'espace interne du groupe d'infusion la demi chambre mobile, quand celle-ci n'a pas déjà été introduite avec les moyens d'entraînement,
- on insère dans l'espace interne du groupe d'infusion l'autre demi chambre en appui sur la face opposée à celle d'appui des moyens d'entraînement, la solidarisation avec ladite face se faisant par l'arrière de ladite autre chambre fixe.

Avantageusement, le procédé comprend aussi les étapes suivantes :
- on insère dans l'intervalle interne du groupe subsistant entre ladite autre demi chambre, d'une part, et la chambre mobile, d'autre part, un ensemble fixe portant, avec liberté de coulissement par rapport à l'ensemble fixe, un dispositif de fermeture amont et aval des demi chambres, les parties latérales dudit ensemble fixe étant solidarisées avec les parties en vis à vis du groupe,
- on introduit les moyens de verrouillage du groupe par rapport à une partie constitutive de la machine le recevant sur une portion externe d'un côté latéral du groupe, ceci par coulissement des moyens de verrouillage dans la longueur du côté,
- on superpose sur les moyens de verrouillage un moyen d'actionnement de telle sorte qu'un déplacement vertical du moyen d'actionnement entraîne un coulissement horizontal des moyens de verrouillage.

D'autres caractéristiques, buts et avantages de la présente invention apparaîtront à la lecture de la description détaillée qui va suivre, et en regard des dessins annexés, donnés à titre d'exemples non limitatifs et sur lesquels :
- la figure 1 est une vue en perspective de dessous d'un groupe d'infusion amovible selon l'invention, les divers éléments à insérer dans ce groupe d'infusion étant montrés espacés du groupe d'infusion pour être mieux visibles,
- la figure 2 est une vue en perspective de dessus du groupe d'infusion selon la présente invention, ce groupe d'infusion étant montré sans les éléments insérés en son intérieur afin de permettre de mieux voir les divers moyens de réception à l'intérieure du groupe,
- la figure 3 est une vue latérale du groupe d'infusion selon la présente invention, ce groupe d'infusion ne comportant à cette figure que son organe de préhension et ses moyens de verrouillage,
- la figure 4 est une coupe longitudinale d'un groupe d'infusion selon la présente invention, cette figure permettant de voir les moyens de renforcement de la ceinture du groupe et les divers moyens de réception spécifiquement adaptés à un élément à insérer à l'intérieur du groupe,
- la figure 5 est une coupe latérale d'un groupe d'infusion selon la présente invention, cette figure permettant de voir les moyens de renforcement de la ceinture du groupe sous un autre angle de vue que la figure 4,
- la figure 6 est une vue de dessous en perspective d'un groupe d'infusion selon la présente invention, le corps des moyens d'entraînement de la demi chambre mobile en tant qu'élément à insérer dans le groupe étant en cours d'installation à l'intérieur dudit groupe,
- la figure 7 est une vue de dessous en perspective d'un groupe d'infusion selon la présente invention, le corps des moyens d'entraînement de la demi chambre mobile en tant qu'élément à insérer dans le groupe étant en position finale d'installation à l'intérieur dudit groupe,
- la figure 8 est une vue de dessus en perspective d'un groupe d'infusion selon la présente invention, montrant notamment l'élément annulaire faisant bride du corps des moyens d'entraînement en position finale d'insertion du corps à l'intérieur dudit groupe,
- la figure 9 est une vue de dessous en perspective d'un groupe d'infusion selon la présente invention, la demi chambre fixe en tant qu'élément inséré dans le groupe étant en cours d'installation à l'intérieur dudit groupe,
- la figure 10 est une vue de dessus en perspective d'un groupe d'infusion selon la présente invention, l'ensemble fixe comportant le dispositif de fermeture étant montré espacé de l'intérieur dudit groupe avant son insertion dans le groupe,
- la figure 11 est une vue latérale en perspective d'un groupe d'infusion selon la présente invention, l'ensemble fixe et son dispositif de fermeture qu'il porte étant insérés dans le groupe, le dispositif étant dans une première position,
- la figure 12 est une vue en perspective sous un autre angle de vue que la figure 11 d'un groupe d'infusion selon la présente invention, l'ensemble fixe portant le dispositif de fermeture étant inséré dans le groupe et le dispositif étant dans une seconde position autre que celle montrée à la figure 11,
- la figure 13 est une vue en perspective sous un autre angle de vue que la figure 12 d'un groupe d'infusion selon la présente invention, la totalité des éléments à insérer dans le groupe d'infusion étant en place dans ce groupe, ainsi que les moyens de verrouillage sur la face externe de chaque côté latéral du groupe d'infusion et leur moyens d'actionnement,
- la figure 14 est une vue latérale en perspective d'un réceptacle selon la présente invention, le réceptacle illustrant une partie constitutive de la machine recevant en son intérieur le groupe d'infusion.

Dans ce qui va suivre, on qualifiera d'amont et d'aval les portions d'espace respectivement disposées avant et après un point considéré relativement au trajet normal d'une dose dans la machine lors d'un cycle de préparation d'une boisson.

Les faces du groupe d'infusion les plus longues et portant les moyens de verrouillage seront désignées comme faces latérales, leurs faces adjacentes étant dénommées respectivement face avant quand elle est la face la plus éloignée des moyens de verrouillage et celle portant la demi chambre fixe et face arrière dans l'autre cas où elle porte les moyens d'entraînement de la demi chambre mobile. Les appellations interne ou externe pour des parties correspondent à une place respectivement tournée vers l'intérieur ou opposée à l'intérieur du groupe d'infusion ou du réceptacle.

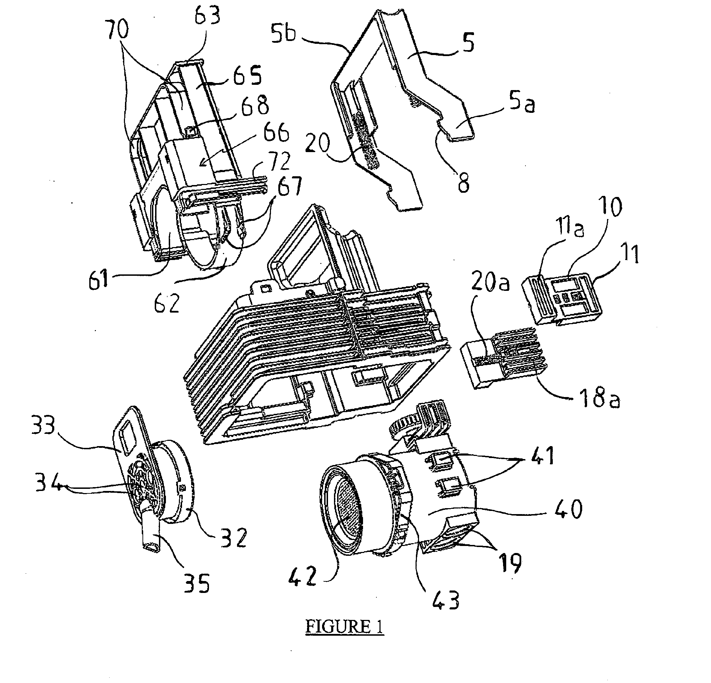

A la figure 1, les divers éléments introduits dans ou positionnés sur le groupe d'infusion de la machine de production de boissons par extraction d'un produit à infuser peuvent être vus, ces éléments étant placés à distance du groupe d'infusion. Ces éléments de la machine sont au moins pour une partie d'entre eux en plastique et comprennent des moyens spécifiques à chaque élément coopérant avec des moyens de réception complémentaires portés par le groupe 1 d'infusion.

Par moyens de réception, il est entendu des moyens spécifiquement adaptés à un élément à insérer. Ainsi, ces moyens de réception peuvent être des moyens de fixation permanente, comme par exemple pour l'organe de préhension 6 qui fait avantageusement une unique et même pièce avec le groupe d'infusion. Ils peuvent être aussi des moyens de fixation amovible, comme pour l'ensemble fixe 66 et aussi des moyens de coulissement comme pour le dispositif de fermeture 60 ainsi que des moyens de support dont certains contribuent à l'insertion de l'élément associé à l'intérieur du groupe.

Ceci est notamment le cas pour les moyens de coulissement du corps 40 comprenant les moyens d'entraînement. Ceci s'applique aussi aux moyens de fixation amovible du corps qui sont disposés vers l'avant de celui-ci et mettent sous tension une pièce insérée dans ledit corps comme il sera vu ultérieurement.

Dans l'espace interne du groupe 1 d'infusion, peuvent être insérés un ensemble fixe 66 avec des moyens de guidage de la dose à infuser prenant aux figures la forme d'une trémie et portant un dispositif de fermeture 60 libre de déplacement par rapport à l'ensemble fixe 66, une demi chambre fixe 32 et une demi chambre mobile 42, cette demi chambre mobile 42 présentant des moyens d'entraînement logés dans un corps 40. Aux figures, la demi chambre mobile 42 est logée dans le corps 40 avec ses moyens d'entraînement mais ce n'est pas du tout obligatoire, la demi chambre mobile 42 pouvant former une pièce séparée du corps 40 et être insérée dans le groupe indépendamment de ses moyens d'entraînement puis raccordée à ceux-ci.

De plus, latéralement au groupe, des moyens de verrouillage 10 ainsi que leur moyen d'actionnement 5 peuvent aussi être solidarisés au groupe 1 d'infusion. Ceci sera détaillé ultérieurement.

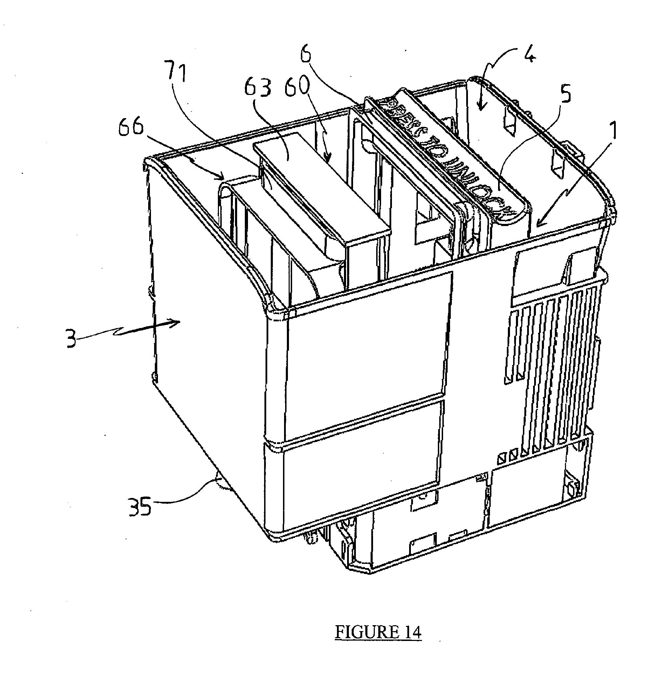

Le groupe 1 d'infusion peut être logé dans un réceptacle 3. Ceci n'est pas limitatif et le groupe 1 d'infusion peut être solidarisé par exemple à une partie constitutive de la machine sans être logé dans celle-ci. L'insertion du groupe 1 d'infusion dans le réceptacle 3 est montrée notamment à la figure 14. Le réceptacle 3 sert ainsi d'élément support pour le groupe 1 d'infusion en le recevant dans son espace interne 4 mais aussi à l'alimentation en eau chaude sous pression de ce groupe 1.

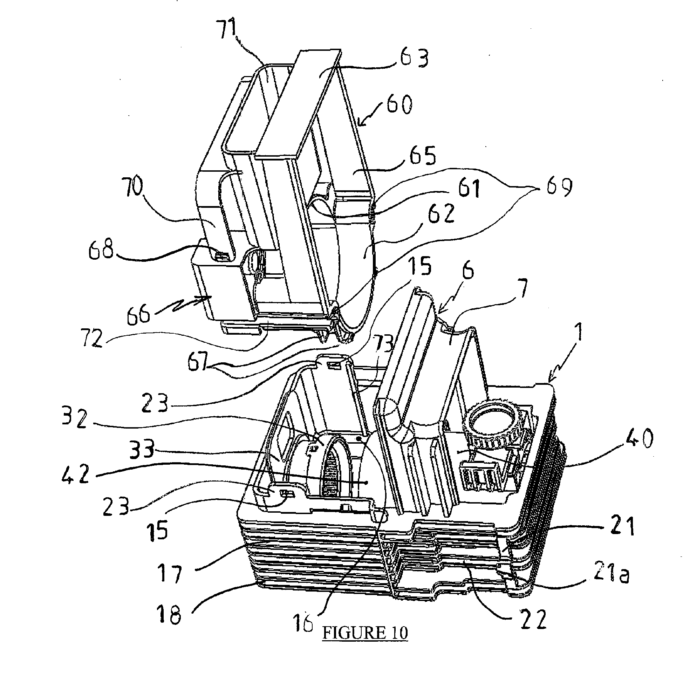

En position montée des demi chambres fixe 32 et mobile 42, comme il peut être vu notamment à la figure 10, la demi chambre mobile 42 est en vis à vis de la demi chambre fixe 32 et à distance de celle-ci. Lors de la fermeture des deux demi chambres 32 et 42 pour former la chambre d'extraction du groupe, la demi chambre mobile 42 est entraînée en translation par ses moyens d'entraînement logés à l'intérieur du corps 40 et vient s'appuyer contre la demi chambre fixe 32. Les moyens d'entraînement, pouvant être avantageusement sous la forme d'un vérin, assurent également la fermeture étanche de la chambre pendant la phase d'infusion du produit emprisonné entre les deux demi chambres 32 et 42, cette infusion se faisant sous haute pression.

Le produit est avantageusement contenu dans une dose. Chacune des demi chambres 32 ou 42 présente une extrémité définissant un pourtour contenu dans un plan sensiblement perpendiculaire à l'axe longitudinal du groupe d'infusion 1. Référence sera faite au document WO-A-2008/142040 pour la description d'une telle machine de production de boissons.

Les éléments principaux à insérer dans le groupe 1 d'infusion peuvent être la demi chambre fixe 32, la demi chambre mobile 42 et ses moyens d'entraînement, ces deux derniers éléments étant avantageusement regroupés en un seul élément sous la dénomination corps 40 des moyens d'entraînement.

Comme précédemment mentionné, plus la pression d'infusion est grande et plus l'effort de fermeture des deux demi chambres 32 et 42 d'infusion doit être important pour en assurer l'étanchéité pendant l'infusion. L'effort important appliqué sur la demi chambre fixe 32 par ses moyens d'actionnement entraîne en réaction un effort tout aussi important mais de sens contraire sur les moyens d'entraînement et la demi chambre mobile 42, ce qui peut entraîner la destruction au moins partiellement de la machine de préparation de boisson sous haute pression.

De plus, lors de l'infusion de la dose, le système hydraulique de la machine subit une poussée verticale proportionnelle à sa surface projetée et à la pression de l'eau qui le traverse. Cette poussée hydraulique verticale est, par exemple, très importante lors de l'infusion de café expresso qui nécessite une pression supérieure à 8 bars voire supérieure à 15 bars ou 20 bars. Il convient d'assurer un maintien des éléments insérés dans le groupe 1 d'infusion ainsi que son propre maintien quand lui-même est placé dans une partie constitutive de la machine comme le réceptacle 3 contre la poussée hydraulique haute pression durant l'infusion et/ou durant la phase de poussée des moyens d'entraînement.

Le maintien des éléments 32, 40, 42, 60, 66 par rapport au groupe 1 d'infusion dans la machine nécessite une reprise des efforts par un ensemble d'accrochage robuste qui doit néanmoins rester facilement manipulable par l'utilisateur de la machine. En outre, comme précédemment mentionné, ce maintien ne doit pas augmenter l'encombrement du groupe 1 d'infusion ni gêner son assemblage ou son désassemblage dans ou hors du réceptacle 3.

D'autre part, il est avantageux que l'assemblage des éléments insérés 32, 42, 60, 66 dans le groupe 1 d'infusion d'infusion d'une machine à préparation de boissons sous haute pression, ces éléments étant solidarisés avec ou supportés par une portion dudit groupe 1, se fasse de la manière la plus simple possible, en tenant compte du rôle de l'élément inséré dans le groupe 1 et des efforts qui lui sont appliqués.

Selon la présente invention, il est prévu une ceinture 17 fermée formant la périphérie du groupe 1 d'infusion. Cette ceinture 17 est avantageusement réalisée en matière plastique technique et comporte des moyens de renforcement pour supporter les efforts transmis par au moins un élément inséré. Aux figures, ces moyens de renforcement sont sous la forme de nervures 18 de renfort sur son pourtour pour tenir les contraintes énormes lors de l'infusion à plus de 20 bars. Ces nervures 18 s'étendent avantageusement sur chaque côté de la ceinture 17 dans la longueur dudit côté. Il peut n'y avoir qu'une nervure 18 sur au moins une face mais il est préféré avoir des rangées de nervures 18 qui s'étendent parallèlement dans la longueur de la face, donc horizontalement quand le groupe 1 d'infusion est dans sa position montée dans la machine.

L'utilisation de nervures 18 prévues sur la ceinture 17 est une caractéristique particulièrement avantageuse mais non limitative de la présente invention. Les caractéristiques importantes de la ceinture 17 sont premièrement que la ceinture 17 comprenne des moyens de reprise des efforts générés lors de l'infusion sur au moins un élément et que secondement la ceinture de renforcement comprenne des moyens de réception appropriés pour au moins un élément inséré.

En ce qui concerne les moyens de réception, ceux-ci sont répartis à l'intérieur de la ceinture 17 de manière à optimiser la reprise globale des efforts générés lors de l'infusion, par exemple en ne provoquant pas de discontinuité dans la géométrie interne de la ceinture 17.

Avantageusement, il est utilisé des matières plastiques, de préférence injectées pour la fabrication de la ceinture 17 et des autres éléments. Ces matières plastiques peuvent être de différents types, par exemple des plastiques techniques à base de polymères renforcés par des fibres de verre, de kevlar ou de carbone. En effet, ces matières plastiques permettent d'atteindre des caractéristiques mécaniques proches de celles des métaux légers comme l'aluminium.

Ainsi, peuvent être en matière plastique le corps 40 comprenant les moyens d'entraînement et la chambre mobile 42, ces moyens pouvant être avantageusement un vérin, la poignée 5, les deux demi chambres 32 et 42, l'ensemble mobile 66 et le dispositif 60 de fermeture ainsi que les moyens de verrouillage 10 du groupe d'infusion 1 sur le réceptacle 3.

Le remplacement possible de pièces en acier par des pièces en polymère technique comme, par exemple, un polysulfone chargé de fibres de verre ou de carbone ou un polyphtalamide chargé de fibres de verre ou de carbone nécessite une plus grande section pour supporter les contraintes équivalentes et peut ne pas conduire forcément à une réduction du volume global du groupe d'infusion ou de la machine.

La ceinture 17 présente une forme sensiblement parallélépipédique et creuse en son milieu, formant ainsi un espace interne 2 dans le groupe 1. Cette forme est creuse afin de pouvoir installer le corps 40 des moyens d'entraînement par le dessous du groupe 1, ces moyens étant avantageusement constitués d'une chambre de vérin fixe et d'un piston mobile coulissant à l'intérieur de la chambre du vérin formant ledit corps.

La tenue mécanique de la ceinture 17 face aux efforts générés par le vérin hydraulique faisant office de moyens d'entraînement est assurée par une section transversale importante, avantageusement nécessaire pour réduire les contraintes induites à des valeurs admissibles par le plastique technique. Les contraintes maximales admissibles d'un plastique technique sont nettement plus faibles que celles d'un acier, dans un rapport de 1 à 5, ce qui, à effort égal, augmente dans la même proportion le volume de matière plastique à mettre en oeuvre pour assurer la tenue mécanique.

Pour contenir le volume et le poids de la ceinture 17 dans des gammes de valeurs désirables, il est prévu l'ajout de multiples nervures 18 horizontales perpendiculaires à la paroi verticale de la ceinture 17, quand la ceinture est en place dans le groupe 1. Avantageusement, ces nervures 18 sont réparties en plusieurs niveaux sur le pourtour externe de la ceinture 17 afin de rendre la pièce moulable. La répartition en plusieurs niveaux des nervures 18 permet d'installer une épaisseur de chaque nervure 18 identique à celle de la paroi verticale de la ceinture 17 pour en assurer un moulage optimal tout en lui procurant plus d'inertie pour limiter ses déformations sous charge.

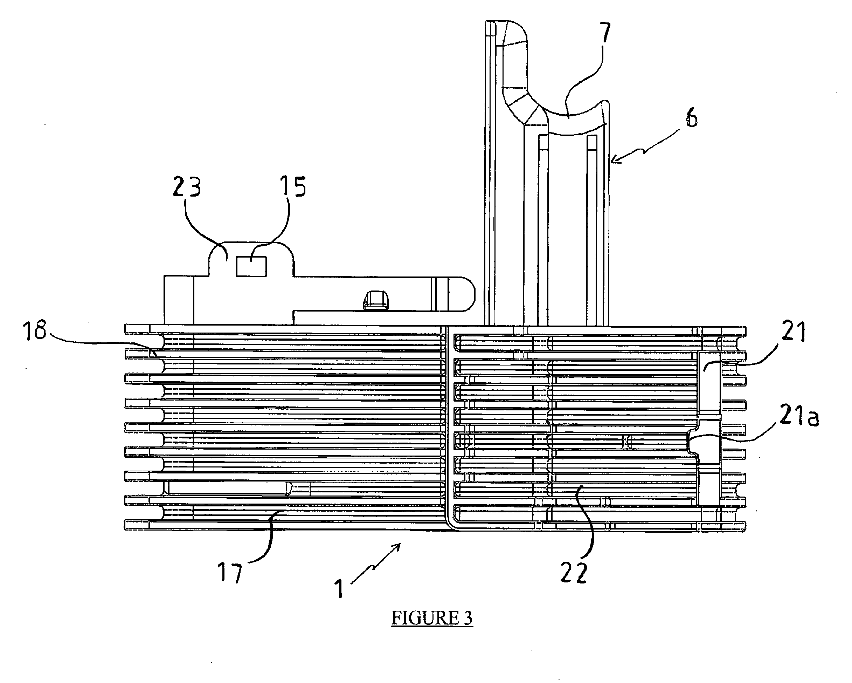

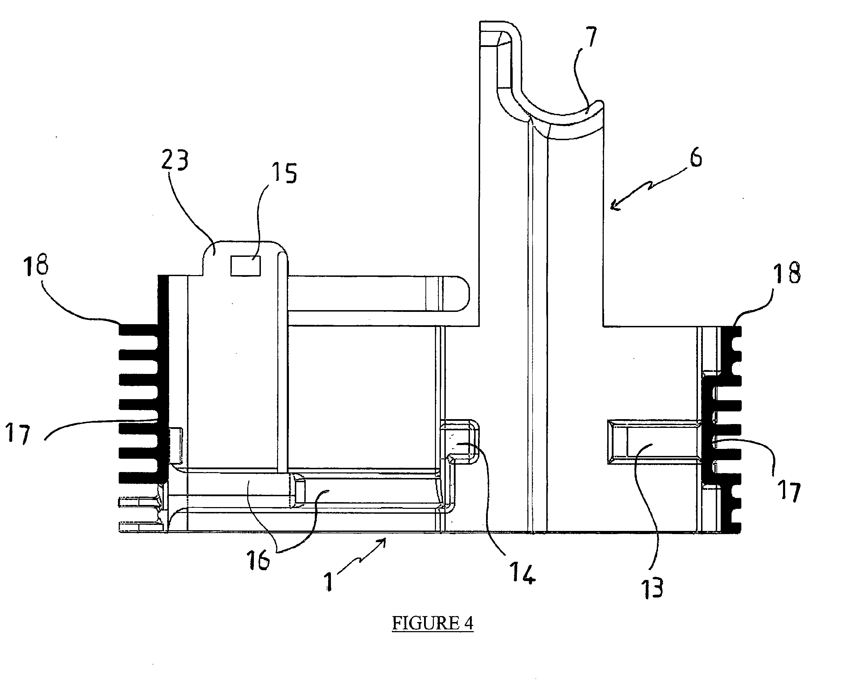

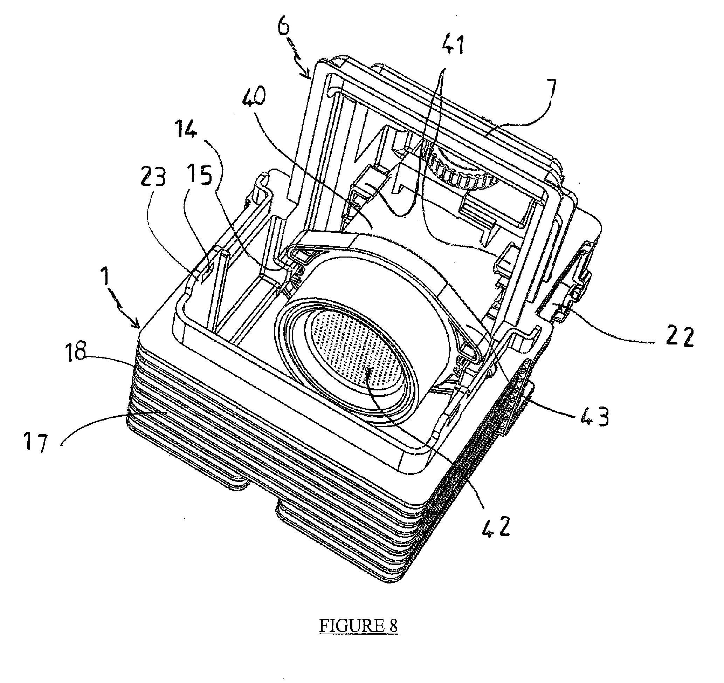

Comme il est montré à la figure 14, un tel groupe 1 d'infusion, globalement parallélépipédique, peut être installé dans un réceptacle 3 solidaire de la machine à café expresso pour en assurer le positionnement au sein de la machine. Le bord d'extrémité des nervures 18 de la ceinture 17, non visible à la figure 14 mais visible aux figures 1 à 13, assure le centrage et le guidage du groupe 1 d'infusion dans ce réceptacle 3.

Les principaux éléments insérés dans le groupe 1 vont maintenant être décrits ainsi que les moyens de réception prévus spécifiquement dans le groupe 1 pour leur insertion.

Dans l'exemple de réalisation présenté, l'une des demi chambres, désignée par la suite demi chambre fixe 32, est solidaire du groupe d'infusion 1 de la machine. L'autre demi chambre, désignée demi chambre mobile 42, est portée par un corps 40 comprenant aussi les moyens d'entraînement.

Dans le cadre de l'exemple de réalisation représenté, une des demi chambres 32 ou 42 présente un conduit d'arrivée d'eau apte à recevoir l'embouchure d'un circuit d'eau chaude. De manière conventionnelle, le circuit d'eau chaude comporte un réservoir, une chaudière permettant d'augmenter la température de l'eau du réservoir jusqu'à une température souhaitée en vue de son infusion dans la chambre d'extraction, ainsi qu'une pompe permettant d'élever la pression de l'eau dans le circuit.

Lors de l'infusion, les deux demi chambres 32 et 42 sont maintenues fermement au contact l'une de l'autre et délimitent un volume étanche de réception de la dose. L'étanchéité peut être réalisée par application des pourtours des deux demi chambres 32 et 42 sur le pourtour de la dose qui fait alors office de joint. L'étanchéité peut également être assurée ou être renforcée des moyens d'étanchéité rapportés. Les demi chambres 32 et 42 sont aptes à être disposées en contact mutuel en insérant entre elles une dose pour former un volume étanche faisant office de chambre d'extraction. L'invention n'implique cependant en aucune manière que les deux demi chambres 32 et 42 présentent mutuellement une quelconque symétrie.

La demi chambre fixe 32 comporte à son dos une plaque de support 33 ainsi qu'à sa partie inférieure un conduit d'évacuation 35 de boissons en communication fluidique, d'une part, avec l'intérieur de la chambre d'extraction et, d'autre part, avec une sortie de boisson. Ce conduit d'évacuation 35 est destiné à assurer l'évacuation de la boisson résultant de l'infusion de la dose, vers un contenant tel qu'une tasse à café.

Après infusion, lorsque la demi chambre mobile 42 est éloignée de la demi chambre fixe 32, la chambre d'extraction est alors ouverte, la dose déjà infusée n'est alors plus enserrée dans la chambre d'extraction précédemment formée par ces deux demi chambres 32 et 42. Cette dose est évacuée de la chambre par gravité et tombe dans un bac de récupération.

Dans le procédé d'insertion selon l'invention des éléments 32, 40, 42, 60, 66 dans le groupe 1, il est procédé tout d'abord à l'insertion des moyens d'entraînement de la demi chambre mobile 42.

En ce qui concerne les moyens de réception des moyens d'entraînement du corps 40, l'espace interne 2 du groupe 1 d'infusion, délimité par la ceinture 17, comprend sur chacun de ses côtés latéraux un rail 13 pour le coulissement du corps 40 des moyens d'entraînement sur celui-ci. Ainsi, le corps 40 est installé en appui contre la face intérieure de la partie arrière de la ceinture 17 en ayant été guidé dans cette position par coulissement sur les rails 13. Pour ce faire, le corps 40 comprend avantageusement sur chacun de ses côtés latéraux deux portions en saillie 41 formant un intervalle entre elles et destiné à recevoir respectivement un rail 13 de coulissement porté par l'espace intérieur.

La coopération entre rail 13 et portions en saillie 41 l'encadrant présente aussi l'avantage de bien maintenir le corps 40 dans le groupe 1 d'infusion quand une poussée verticale transmise par les connecteurs hydrauliques 19 lui est communiquée, le déplacement vertical du corps 40 étant limité aussi bien de bas en haut que de haut en bas.

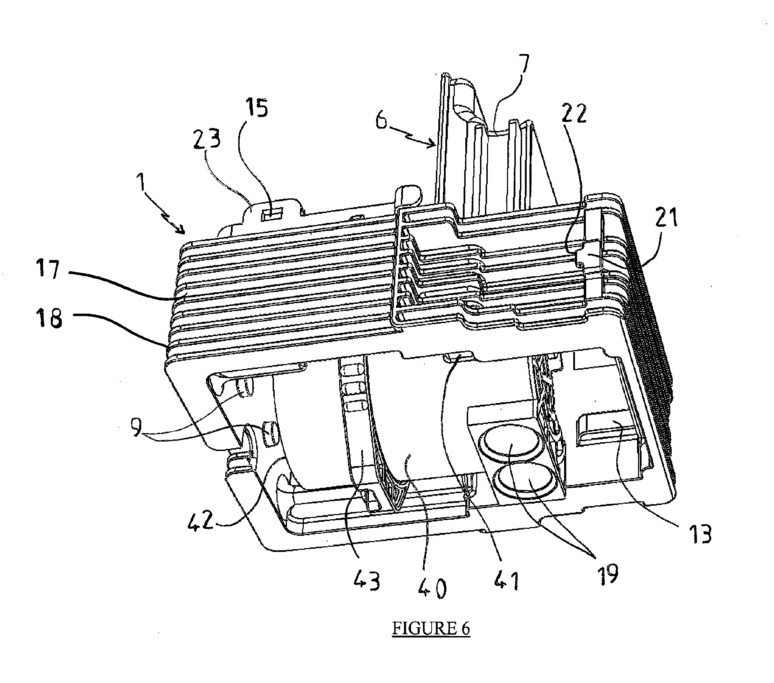

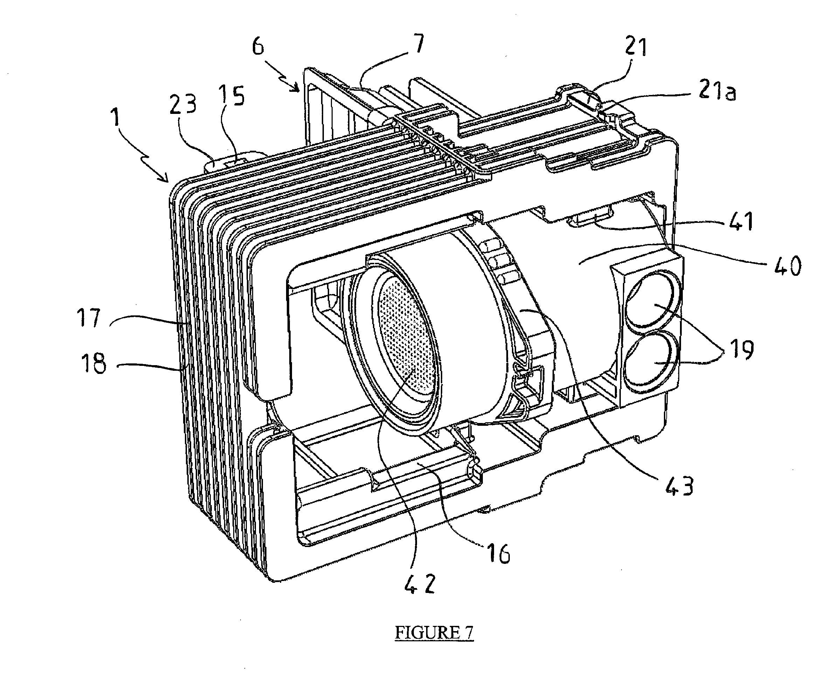

L'installation du corps 40 des moyens d'entraînement à l'intérieur du groupe d'infusion 1 est montrée notamment aux figures 6 et 7, pour lesquelles le corps 40 est d'abord introduit par la cavité inférieure du groupe 1 d'infusion du côté de la face avant de ce groupe 1, face avant qui porte la demi chambre fixe 32 quand celle-ci est insérée et qui est donc la face opposée à celle qui porte le corps en position insérée dans le groupe 1. Le corps 40 est ensuite coulissé vers la face arrière du groupe 1 sur les rails 13 installés sur les faces adjacentes à la face arrière du groupe 1 qui est sa face d'appui en position insérée.

En fonctionnement, des moyens de rappel sont prévus pour replacer les moyens d'entraînement de la chambre mobile 42 dans leur position éloignée de la chambre fixe 32. Dans le cas d'une utilisation d'un vérin comme moyens d'entraînement, un ressort de rappel, permettant le retour du piston de vérin en l'absence de pression, est installé en précompression entre la face extérieure du piston et une pièce de forme annulaire 43 entourant au moins partiellement le corps et avantageusement sous forme d'une bride. La pièce 43 est avantageusement en matière plastique injectée et est en appui sur un ergot 14 disposé sur chacune des deux faces internes de la ceinture 17 adjacentes à la face d'appui du corps 40, ces ergots 14 servant de reliefs d'encliquetage pour la pièce de forme annulaire 43. Le corps 40 est ainsi calé contre sa face d'appui interne de la ceinture 17. L'encliquetage de la pièce 43 se fait avantageusement par rotation d'un quart de tour de cette pièce 43.

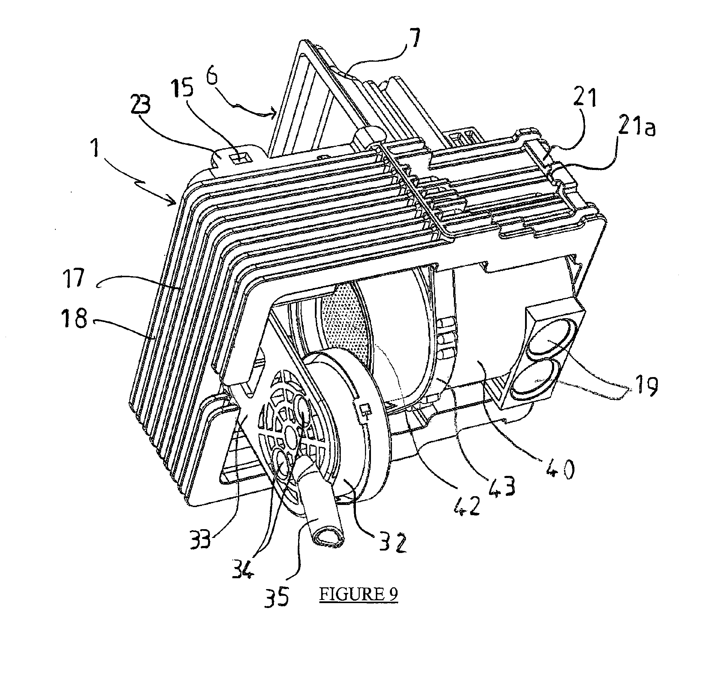

Il est ensuite procédé à l'insertion de la demi chambre fixe 32 dans le groupe 1 d'infusion. Les évidements 34 pratiqués dans la plaque 33 au dos de la chambre fixe 32 et opposée à son ouverture sont visibles aux figures 1 et 9. L'espace interne 2 du groupe 1 délimité par la ceinture 17 porte aussi sur sa face avant des plots 9 coopérant avec les évidements 34 pratiqués sur la plaque 33 au dos de la demi chambre fixe 32, ces plots 9 étant visibles à la figure 6. Une disposition contraire, c'est à dire plots portés par la plaque et évidements portés par la ceinture 17 est aussi possible. Ceci peut aussi être appliqué aux autres moyens de réception.

La demi chambre fixe 32 est donc installée sur la face opposée à celle de la face d'appui du corps 40 des moyens d'entraînement. La demi chambre fixe 32 est maintenue en appui sur les deux plots 9 de la ceinture 17 par insertion entre elle et la demi chambre mobile 42 de l'ensemble fixe 66 portant le dispositif 60 de fermeture pouvant coulisser par rapport audit ensemble 66.

Quand la demi chambre mobile 42 ne fait pas partie du corps 40 des moyens d'entraînement, celle-ci est insérée dans le groupe 1 d'infusion avant ou après l'insertion de la demi chambre mobile 32 et rendue solidaire de l'extrémité des moyens d'entraînement tournée vers elle, par exemple de l'extrémité de la tige d'un vérin dont la course assure ainsi la fermeture étanche de la demi chambre 42 par son rapprochement avec la demi chambre fixe 32.

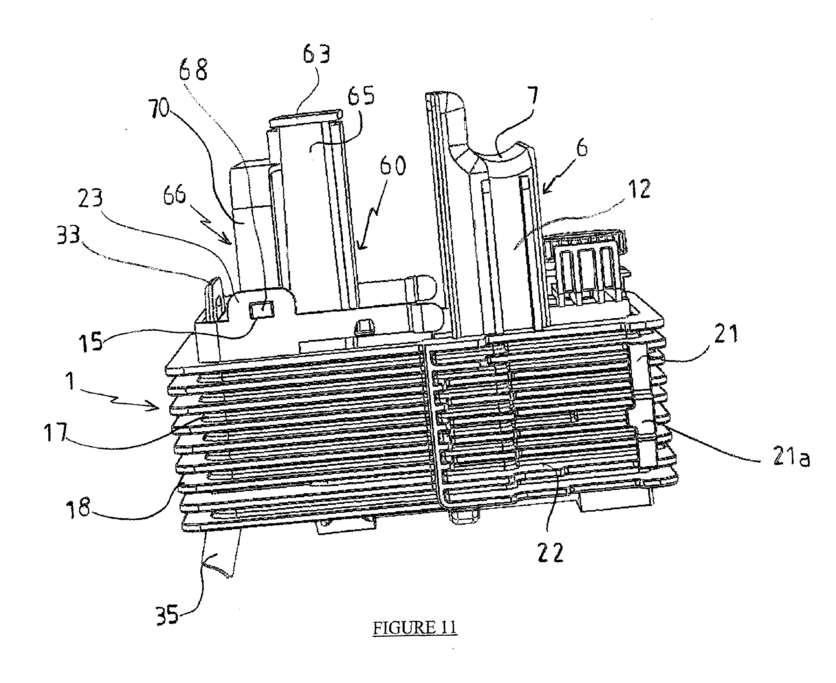

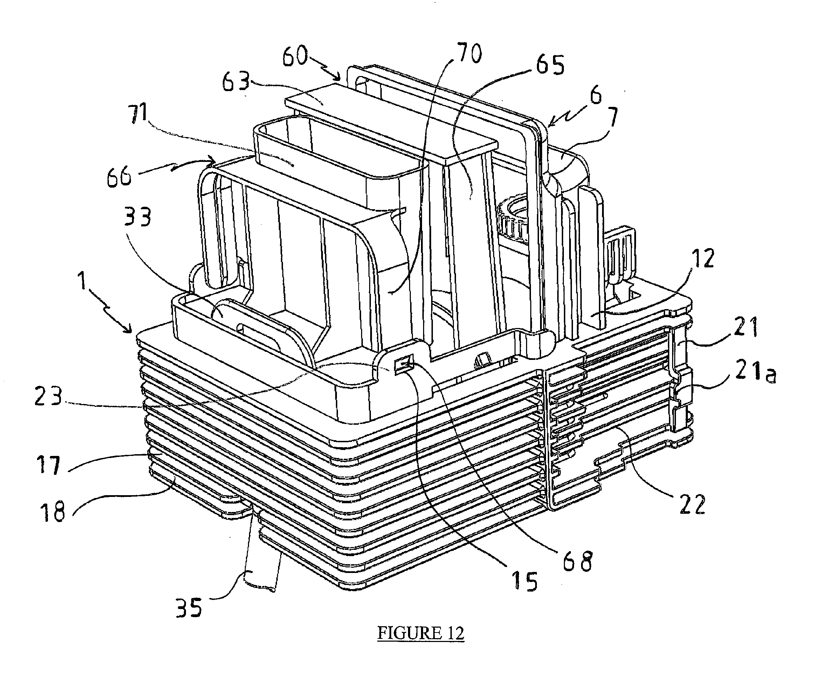

Une autre partie constitutive de la machine de production de boissons est le dispositif de fermeture 60 solidarisé à un ensemble fixe 66 portant des moyens de guidage sous forme d'une trémie 71, avec liberté de coulissement de ce dispositif de fermeture 60 par rapport à l'ensemble fixe. A la figure 1 comme à la figure 11, cette trémie est cachée par les moyens d'obstruction 63 du dispositif de fermeture 60 car positionnée juste en dessous de ceux-ci mais la trémie 71 est notamment visible sur les figures 10 et 12.

Cette trémie 71 sert de moyens de guidage à la dose et est apte à empêcher tout mouvement significatif de la dose dans un plan horizontal tout en autorisant son déplacement vertical. Elle est agencée de manière à assurer le guidage de la dose en amont des moyens de fermeture amont 61. Par ailleurs, la trémie 71 est disposée de manière à être positionnée au regard de l'ouverture de la chambre d'extraction dans la première position afin d'autoriser l'introduction d'une dose dans cette dernière lorsque les moyens de fermeture amont 61 sont escamotés. Dans la deuxième position, elle est agencée de manière à être disposée sensiblement en avant de la chambre.

Par ailleurs, la trémie 71 est verticalement disposée de manière à être suffisamment proches des moyens de fermeture amont 61 pour assurer le maintien de la dose lorsque cette dernière repose sur les moyens de fermeture amont 61 du dispositif de fermeture 60. Ainsi, lorsqu'une dose repose sur les moyens de fermeture amont 61 et que ces derniers translatent vers l'avant, la trémie 71 contribue à empêcher toute translation longitudinale significative de la dose. Cette dernière est donc maintenue au regard de l'ouverture de la chambre d'extraction lorsque les moyens de fermeture amont 61 sont totalement escamotés. Le mouvement relatif du dispositif de fermeture 60 et de la trémie 71 permet ainsi le transfert de la dose depuis les moyens de fermeture amont 61 à la chambre. Par ailleurs, ce mouvement relatif permet de protéger l'intégrité de la dose lors de ce transfert.

La trémie 71 est supportée sur sa face opposée au dispositif de fermeture 60 par des branches 70 verticales reliées entre elles en formant un U renversé, chacune des branches 70 s'étendant verticalement en partant d'un côté latéral respectif de l'ensemble fixe 66. L'extrémité inférieure de ces branches 70 présente chacune un téton 68 venant s'encliqueter dans une lumière 15 prévue sur chaque côté latéral du groupe d'infusion 1, la lumière 15 respective étant pratiquée dans une excroissance 23 formée sur le bord supérieur latéral de la ceinture 17. Ce téton 68 peut être avantageusement sous la forme d'une languette flexible.

L'ensemble de fermeture 66 est donc inséré à l'intérieur de la zone 2 en contact avec les deux parois latérales et positionné horizontalement dans un emplacement délimité entre la face interne avant de la ceinture et les nervures 73. Son dernier mouvement relatif possible de translation verticale est limité vers le bas par les renforts latéraux 16 ce qui n'autorise qu'un mouvement vertical vers le haut nécessaire pour son démontage après action sur les branches 70 pour libérer les tétons 68 des lumières 15 pratiquées dans les excroissances 23.

A la partie inférieure du dispositif de fermeture 60, il est prévu deux portions 67 faisant saillie vers le bas du dispositif de fermeture 60 entre lesquelles s'insère des moyens d'entraînement du dispositif pour son déplacement. Ces moyens d'entraînement sont avantageusement différents des moyens d'entraînement contenus dans le corps 40 pour le déplacement de la demi chambre mobile 42 mais ils peuvent aussi être les mêmes.

L'ensemble fixe 66 et le dispositif de fermeture 60 sont ainsi sous la forme de deux pièces différentes, un moyen de contact partiel amovible étant prévu entre eux, ce moyen garantissant une liberté de déplacement du dispositif de fermeture 60 par rapport à l'ensemble fixe 66 et étant par exemple un moyen de guidage du dispositif de fermeture 60 sur l'ensemble fixe 66.

Le dispositif de fermeture 60 comporte des moyens de fermeture aval 62 ainsi que des moyens de fermeture amont 61. Il est distinct de chacune des deux demi chambres 32 et 42 formant la chambre d'extraction.

Les moyens de fermeture aval 62 sont disposés en aval de la chambre d'extraction. Ils sont agencés de manière à faire office de butée d'arrêt escamotable pour une dose introduite dans la chambre. Dans une position non escamotée les moyens de fermeture aval 62 assurent la réception d'une dose introduite dans la chambre alors que celle-ci est ouverte, et empêchent l'éjection par gravité de cette dose vers l'aval de la chambre.

Dans cette position, les moyens de fermeture aval 62 interdisent également toute intrusion dans la chambre depuis l'aval de cette dernière. Ainsi l'utilisateur ne peut pas, par exemple, introduire ses doigts dans la chambre. Dans une position escamotée, les moyens de fermeture aval 62 ne forment pas une butée d'arrêt pour une dose introduite dans la chambre et permettent donc l'évacuation d'une dose lors de l'ouverture de la chambre.

Les moyens de fermeture amont 61 sont agencés de manière à faire office de butée d'arrêt escamotable. Ils sont disposés en amont de la chambre d'extraction. Dans une position non escamotée les moyens de fermeture amont 61 empêchent l'accès d'une dose ou de tout autre élément dans la chambre d'extraction depuis l'amont de cette dernière.

Dans cette position non escamotée, les moyens de fermeture amont 61 assurent également la réception et participent au maintien en position d'une dose introduite dans la machine. En position escamotée, les moyens de fermeture amont 61 autorisent l'introduction d'une dose dans la chambre d'extraction depuis l'amont de cette dernière.

La machine de production de boissons comprend un système d'entraînement agencé de manière à faire passer le dispositif de fermeture 60 alternativement d'une première position dans laquelle les moyens de fermeture amont 61 empêchent l'entrée d'une dose dans la chambre et les moyens de fermeture aval 62 assurent qu'aucune dose usagée ne demeure présente dans la chambre, à une deuxième position dans laquelle les moyens de fermeture amont 61 autorisent l'entrée d'une dose dans la chambre et les moyens de fermeture aval 62 permettent la réception et le maintien de la dose dans la chambre.

Le dispositif de fermeture 60 est agencé de manière à ce que la position des moyens de fermeture amont 61 conditionne la position des moyens de fermeture aval 62 et à ce que la position des moyens de fermeture aval 62 conditionne la position des moyens de fermeture amont 61. Ainsi, pour une position donnée des moyens de fermeture amont 61, les moyens de fermeture aval 62 n'admettent qu'une seule position et inversement. Le dispositif de fermeture 60 présente donc un fonctionnement séquentiel.

Le passage en ouverture ou fermeture des moyens de fermeture amont 61 ou aval 62 du dispositif de fermeture 60 se fait avantageusement par déplacement du dispositif de fermeture 60 entre les deux positions de fermeture spécifiques des moyens de fermeture amont 61 et aval 62. Ce déplacement est avantageusement un coulissement sur deux organes de guidage agencés de manière à guider le dispositif de fermeture 60 dans son déplacement alternatif entre la première et la deuxième position. Chacun des organes de guidage fait office de coulisseau 69 visible en figure 10 apte à assurer le guidage en translation du dispositif de fermeture 60 selon un rail de guidage 72 visible en page 1 installés sur l'ensemble fixe 66.

Le dispositif de fermeture 60 comprend aussi deux bras 65 s'étendant chacun depuis un coulisseau 69 respectif et dans une direction sensiblement perpendiculaire à l'axe de guidage. De manière avantageuse, les moyens de fermeture amont 61 et aval 62 présentent une forme de portion de couronne dont chacune des extrémités joint l'un des bras 65 et qui est centrée sur un axe parallèle aux axes de guidage.

A l'extrémité la plus haute de chacun des bras 65 en joignant ces extrémités, se trouvent des moyens d'obstruction 63 agencés de manière à laisser libre l'ouverture d'entrée de la dose lorsque le dispositif de fermeture est disposé dans la première position et à obstruer cette ouverture lorsque le dispositif de fermeture est disposé dans la deuxième position.

Par ailleurs, les moyens de fermeture amont 61 et aval 62 sont disposés de manière à présenter un décalage mutuel selon la direction principale de déplacement du dispositif de fermeture 60. Ainsi, dans la deuxième position les moyens de fermeture amont 61 sont disposés sensiblement en arrière de la demi chambre fixe 32. Dans la première position les moyens de fermeture amont 61 sont disposés sensiblement en avant de la demi chambre fixe 32. Dans la première position les moyens de fermeture aval 62 sont disposés essentiellement en arrière de la demi chambre mobile 42.

Comme il peut être vu, notamment à la figure 1, en plus des moyens de réception prévus dans le groupe d'infusion 1 et donc à l'intérieur de la ceinture 17, des moyens de verrouillage 10 portés par la face externe des côtés latéraux de la ceinture 17 peuvent aussi être prévus. La ceinture 17 présente tout d'abord un logement 22 sur la face externe de chacun de ses côtés latéraux pour loger un des moyens de verrouillage 10 respectif.

Les nervures longitudinales 18 de renfort de la ceinture 17 du groupe 1 d'infusion précédemment décrites peuvent aussi être utilisées pour réaliser le déplacement des moyens de verrouillage 10. Ces nervures 18 effectuent donc une double fonction, la première étant de renforcer le groupe 1 d'infusion comme précédemment mentionné et la seconde étant de permettre le déplacement des moyens de verrouillage 10 associés à ce groupe 1.

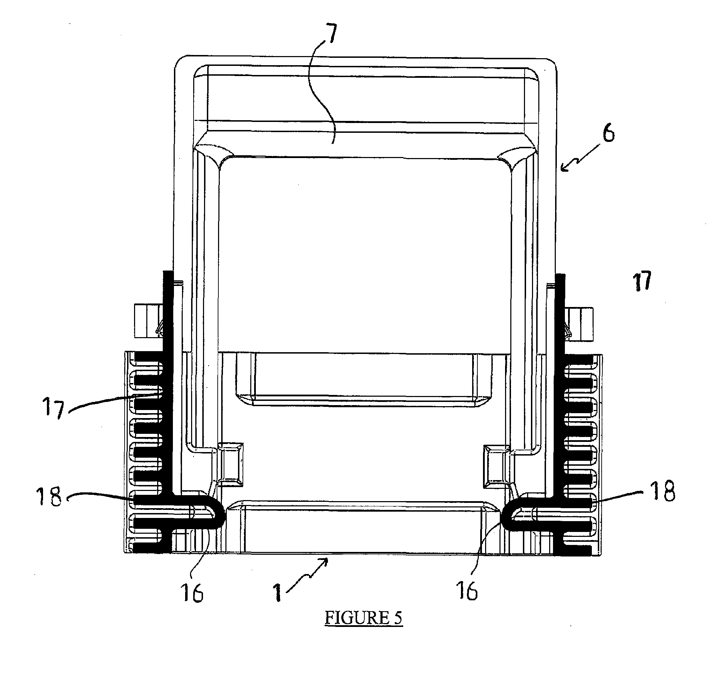

Les moyens de verrouillage 10 comportent avantageusement des reliefs complémentaires 18a, ne provoquant pas de discontinuité dans la géométrie externe de la ceinture 17 afin de permettre la reprise globale des efforts générés lors de l'infusion. Ces reliefs complémentaires 18a sont tournés vers l'intérieur du logement 22 et font face à des rainures de guidage prévus à l'intérieur de ce logement 22 et visibles à la figure 5 afin d'assurer le guidage en translation desdits moyens 10. Ces reliefs complémentaires 18a peuvent par exemple être sous forme de nervures longitudinales adaptées aux nervures 18 de la ceinture 17, ces reliefs complémentaires 18a coulissant entre les rainures de guidage du logement 22 de la ceinture 17.

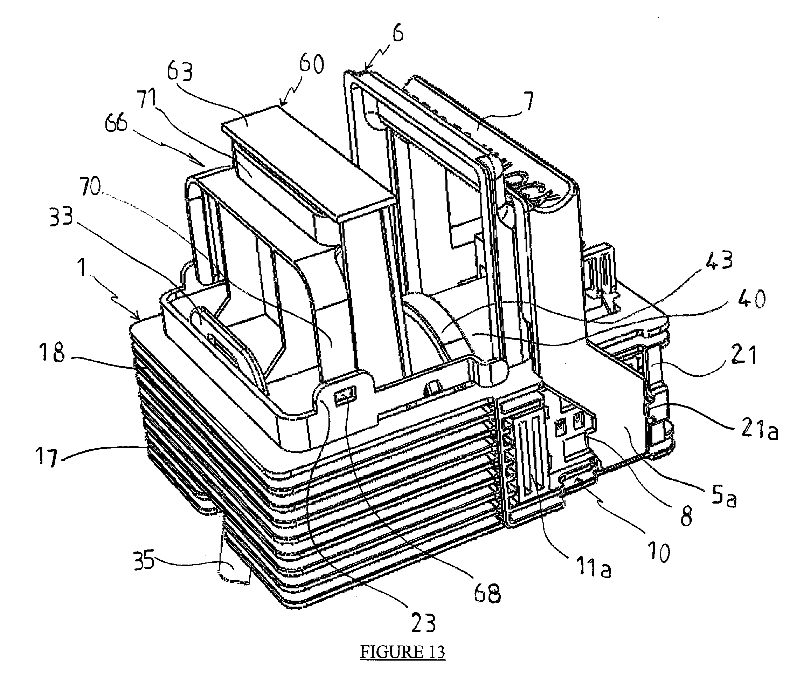

Les moyens de verrouillage 10 présentent avantageusement une partie avant 11 faisant pêne, sortant de la ceinture 17 en position de verrouillage ainsi qu'une partie 11a faisant saillie latéralement des moyens de verrouillage 10, cette partie 11a pouvant aussi servir de pêne en étant reçue dans une gâche adaptée portée par la partie constitutive de la machine de préparation de boisson à laquelle le groupe 1 peut être solidarisé, partie constitutive qui peut être un réceptacle 3. De plus, cette partie 11 a et le montant transversal 21 insèrent entre elles l'extrémité inférieure 5a du bras de la poignée 5 pour son maintien et sa coopération avec les moyens de verrouillage 10, comme il est visible à la figure 13.

Aux figures 1 et 13, les moyens de verrouillage 10 portés par le groupe 1 d'infusion sont visibles en position de retrait pour la figure 13 ou à distance du groupe d'infusion 1 pour la figure 1. Les moyens de verrouillage 10 portés par le groupe 1 d'infusion sont avantageusement sous la forme d'au moins un pêne, préférentiellement un pêne porté par chaque côté latéral de la ceinture 17 du groupe 1. Ces moyens de verrouillage 10 formant pêne sont reçus respectivement dans le logement 22 pratiqué dans sur la face externe d'un côté latéral de la ceinture 17 de sorte que lesdits moyens 10 peuvent être ainsi logés dans la ceinture 17 et ne pas dépasser latéralement de la ceinture 17.

Les moyens de verrouillage 10 formant pêne sont configurés pour venir en prise avec des moyens de verrouillage complémentaires portés par le réceptacle 3, ces moyens de verrouillage complémentaires formant au moins une gâche. Par exemple, ces moyens de verrouillage complémentaires formant au moins une gâche peuvent être avantageusement sous la forme d'au moins un logement recevant la portion formant pêne des moyens de verrouillage 10. Le contraire est aussi possible avec des moyens de verrouillage formant gâche sur le groupe d'infusion et des moyens de verrouillage formant pêne sur le réceptacle.

Avantageusement, les moyens de verrouillage 10 sont réalisés dans la même matière plastique technique que celle de la ceinture 17 et notamment de ses nervures 18. Il est aussi possible que les deux moyens de verrouillage 10, chacun sur un côté latéral de la ceinture 17, puissent former une seule et même pièce totalement symétrique.

Pendant les phases d'infusion, les moyens de verrouillage 10 sont solidaires de la ceinture 17 et assurent son maintien par rapport au réceptacle 3 de la machine sans augmenter l'encombrement du groupe 1 d'infusion dont la forme reste globalement parallélépipédique. La mobilité en translation des moyens de verrouillage 10 leur permet d'être rétractables lors de l'extraction du groupe 1 d'infusion, ce retrait s'effectuant par les moyens d'actionnement 5.

Il est possible de concevoir une autre forme de déplacement des moyens de verrouillage 10 portés par la ceinture 17 du groupe 1 d'infusion qu'un déplacement par coulissement sur l'extérieur d'un côté latéral dudit groupe 1 comme montré aux figures.

Les moyens de verrouillage 10 sont activés ou désactivés par des moyens d'actionnement. Ces moyens d'actionnement comprennent un élément de commande sous la forme d'une poignée 5, cet élément de commande servant à libérer les moyens de verrouillage 10 par action sur ceux-ci dans leur position verrouillée et désolidarisant ainsi le groupe 1 d'infusion de son réceptacle 3 formant l'élément de support dudit groupe 1. Les moyens d'actionnement 5 sont avantageusement configurés pour être actionnés manuellement par l'opérateur, de préférence avec une seule main.

Avantageusement, le groupe 1 d'infusion peut être rendu amovible du réceptacle 3 afin de permettre d'assurer sa maintenance ou le recyclage de la machine le contenant en fin de vie. Un groupe 1 d'infusion en place dans le réceptacle 3 est montré à la figure 14.

Dans la machine selon la présente invention, le réceptacle 3 peut être solidaire de la machine de production de boissons par extraction d'un produit à infuser et présenter un espace interne creux 4 qui reçoit la majeure partie du groupe 1 d'infusion en l'entourant sur tout son pourtour extérieur.

Les moyens d'actionnement 5, visibles au moins partiellement aux figures 1, 13 et 14 portés par le groupe 1 d'infusion commandent les moyens de verrouillage 10 disposés sur le groupe 1 d'infusion. Dans une position de désactivation des moyens d'actionnement 5, les moyens de verrouillage 10 empêchent la désolidarisation du groupe 1 par rapport au réceptacle 3 et dans une position d'activation des moyens d'actionnement 5, les moyens de verrouillage 10 autorisent la désolidarisation du groupe 1 par rapport au réceptacle 3.

Les moyens d'actionnement 5 peuvent aussi être associés à un organe de préhension 6 comprenant vers sa partie supérieure une surface de préhension 7. L'élément de commande, sous la forme d'une poignée 5 aux figures 1 et 13, peut ainsi être avantageusement associé avec l'organe de préhension 6 afin d'effectuer l'enlèvement du groupe 1 d'infusion de l'intérieur du réceptacle 3 quand les moyens de verrouillage 10 sont en position déverrouillée.

Il est à noter que les moyens d'actionnement portés par le groupe d'infusion ne comprennent pas obligatoirement une poignée comme élément de commande bien que cela soit le cas aux figures de la présente invention. Les moyens d'actionnement peuvent, par exemple, comprendre ainsi un élément de commande, par exemple un bouton, destiné à être tiré, pressé ou tourné, ledit élément de commande étant articulé sur le groupe d'infusion et avantageusement configuré pour participer, au moins en partie, à la préhension du groupe en vue de sa séparation du réceptacle.

Comme il peut être vu notamment aux figures 1 et 13, la poignée 5 est avantageusement en forme de U renversé, les extrémités libres 5a du U pointant vers le réceptacle 3, ce réceptacle étant seulement visible à la figure 14, ceci en position montée de la poignée 5 sur le groupe 1 d'infusion. La poignée 5 s'étend donc perpendiculairement au plan formé par le fond du groupe 1 d'infusion ou du réceptacle 3. La poignée 5 est mobile verticalement, c'est à dire perpendiculairement au plan formé par le fond du groupe 1 d'infusion ou par celui de son réceptacle 3. La base du U renversé sert de tête 5b formant surface de préhension pour la poignée 5 et c'est sur la tête 5b qu'appuie ou tire l'opérateur pour provoquer le déplacement de la poignée 5.

L'extrémité inférieure libre 5a de la poignée 5 est reçue dans le logement 22 pratiqué dans la ceinture 17, ce logement 22 servant aussi pour la réception des moyens de verrouillage 10. Ainsi, les moyens de verrouillage 10 et la poignée 5 logés ensemble dans l'évidement 22 prévu dans la ceinture 17 ne dépassent pas latéralement de cette ceinture 17. La ceinture 17 comprend aussi un montant transversal 21, s'étendant au dessus du logement 22 et dont la partie sensiblement médiane présente un ergot 21a dirigé vers l'avant du groupe 1 d'infusion afin de maintenir latéralement la poignée 5 par rapport au groupe 1 d'infusion.

Avant chaque extrémité inférieure libre 5a de la poignée 5, celle-ci présente une portion inclinée dont les côtés, au lieu d'être sensiblement verticaux comme les côtés du reste de la poignée 5, s'étendent avec une inclinaison par rapport à la verticale. Un des côtés de cette portion inclinée forme une surface coopérant avec un élément complémentaire des moyens de verrouillage 10 pour les pousser en position d'activation ou de désactivation.

L'organe de préhension 6 présente aussi une forme en U avec les extrémités du U pointant vers le groupe 1 d'infusion et étant solidarisées avec la ceinture périphérique 17 dudit groupe 1. Cet organe de préhension 6 est ainsi solidaire du groupe 1 et sert à l'enlèvement du groupe 1 hors du réceptacle lorsqu'un opérateur tire verticalement l'organe de préhension 6 vers le haut ou à sa mise en place dans le réceptacle 3.

Avantageusement, l'organe de préhension 6 et la poignée 5 sont adjacents l'un à l'autre, la base 5b du U pour la poignée ou une partie 7 de la base du U pour l'organe de préhension 6 formant leur partie supérieure respective se trouvant approximativement à la même hauteur, au moins lors de l'enlèvement du groupe 1 d'infusion de son réceptacle 3. Ces deux éléments 5 et 6 sont ainsi conformés de sorte qu'un opérateur puisse saisir simultanément et avec une même main la poignée 5 et l'organe de préhension 6.

Avantageusement, l'activation des moyens d'actionnement 5 correspond à une action de l'opérateur afin d'effectuer le déverrouillage des moyens de verrouillage 10 tandis que la désactivation des moyens d'actionnement correspond à une position des moyens d'actionnement 5 pour laquelle aucune action n'est exercée sur eux en vue de déverrouiller les moyens de verrouillage 10. La désactivation des moyens d'actionnement 5 n'est pas à prendre dans un sens strict, étant donné que cette désactivation cesse automatiquement dès que l'opérateur effectue un déplacement de l'élément de commande des moyens d'actionnement en vue du déverrouillage des moyens de verrouillage 10.

Comme il est visible aux figures 1 et 13, la poignée 5 représentant l'élément de commande des moyens d'actionnement comprend un cran de sûreté 8. Ce cran de sûreté 8 présente l'avantage de permettre un montage sans outil de la poignée 5 et de faciliter l'assemblage du groupe 1 d'infusion en usine et sa maintenance, ce cran de sûreté 8 pouvant coopérer avec les moyens de verrouillage 10.

Avantageusement, c'est la descente de la poignée 5 qui désactive les moyens de verrouillage 10 quand une pression verticale orientée vers le bas est effectuée par l'opérateur sur la tête 5b de la poignée 5. Les moyens de verrouillage 10 sont alors poussés vers l'avant du groupe 1 d'infusion dans une position de déverrouillage et donc de libération du groupe 1 d'infusion par rapport au réceptacle le recevant.

Il suffit alors d'une traction exercée sur la poignée 5 et/ou l'organe de préhension 6 pour séparer le groupe 1 d'infusion de son réceptacle, le cran de sûreté 8 de la poignée 5 n'étant plus en butée contre une portion des moyens de verrouillage 10.

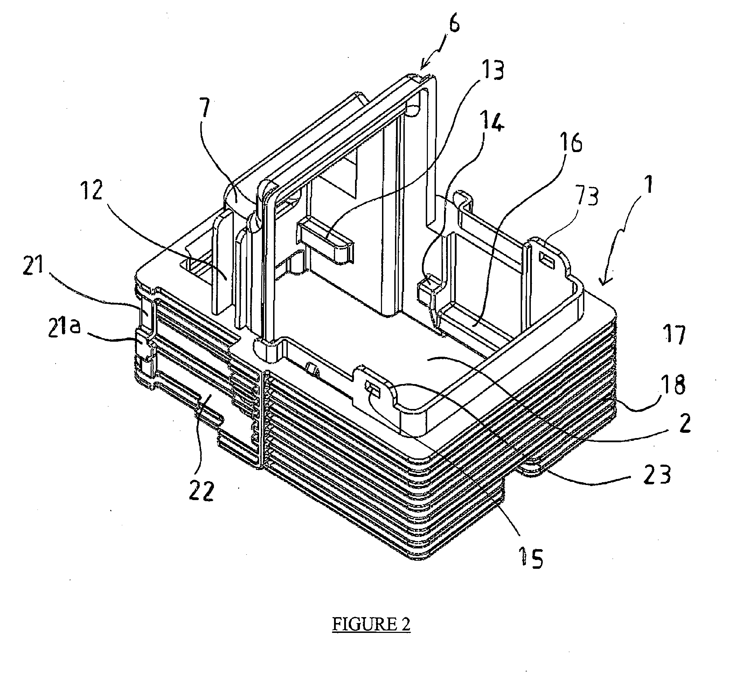

Comme il est visible à la figure 1, des moyens de rappel sont configurés pour ramener les moyens d'actionnement 5 en position haute lorsqu'ils ne sont pas activés, c'est à dire quand aucune pression orientée vers le bas n'est exercée sur eux. Ainsi, selon un mode de réalisation de l'invention, il est prévu deux ressorts verticaux 20 qui poussent la poignée 5 en position haute comme montré à la figure 1, ces deux ressorts verticaux 20 ne permettant à la poignée 5 de prendre la position basse seulement quand une pression de haut en bas est exercée sur elle par un opérateur. Comme il est visible à la figure 2, chacun de ces ressorts verticaux 20 est maintenu dans un couloir 12 s'étendant sensiblement verticalement sur un des montants de l'organe de préhension 6.

Ainsi, la position haute de la poignée 5 correspond à une désactivation des moyens d'actionnement qu'elle constitue, les moyens de verrouillage 10 étant alors rappelés en position de verrouillage par des moyens de rappel associés 20a, ces moyens de rappel 20a exerçant avantageusement leur action horizontalement et étant visibles aux figures 1 et 13.

Ainsi, les moyens d'actionnement 5 selon la présente invention peuvent aussi remplir, avantageusement avec des moyens de préhension 6 additionnels, la fonction de moyens d'insertion et/ou d'enlèvement du groupe 1 d'infusion hors de son réceptacle 3 pour un démontage de l'ensemble.

L'amovibilité du groupe 1 d'infusion nécessite, en outre, une déconnexion des arrivées hydrauliques nécessaires au fonctionnement des moyens d'entraînement, par exemple un vérin. La déconnexion des arrivées hydrauliques s'effectue par des connecteurs verticaux installés sous le groupe 1 d'infusion, ces connecteurs n'étant pas visibles aux figures car disposés dans l'espace interne 4 du réceptacle 3 en traversant le fond de celui-ci.

Ces connecteurs hydrauliques sont avantageusement au nombre de deux, le groupe 1 d'infusion comprenant deux connecteurs complémentaires 19 afin d'assurer l'alimentation hydraulique du groupe 1, visibles aux figures 1, 6, 7 et 9. Avantageusement, les moyens de verrouillage 10 et leurs moyens de verrouillage complémentaires portés par le réceptacle 3 sont répartis de part et d'autre des connecteurs à l'intérieur du réceptacle 3 en empêchant ainsi la rotation du groupe 1 d'infusion sous l'effet de la pression du fluide alimentant le groupe 1.

Ces moyens de verrouillage complémentaires sont avantageusement positionnés sur des parois du réceptacle 3 les plus éloignées de l'axe de symétrie séparant les connecteurs du réceptacle 3. Ce positionnement accroît le bras de levier par rapport à l'axe de rotation autour duquel le groupe 1 aurait tendance à tourner sous l'effet de la pression. Cette mesure permet ainsi de conserver un encombrement et un poids limités tout en offrant une bonne robustesse.

Il est à noter qu'à l'exception des ressorts 20 et 20a, tout le groupe d'infusion et ses éléments insérés ainsi que les moyens de verrouillage peuvent être réalisés en matière plastique injectée, ce qui réduit les temps de fabrication et d'assemblage et facilite le démantèlement en fin de vie de la machine, tout en présentant une grande résistance aux efforts transmis au groupe d'infusion par les éléments insérés à l'intérieur de ce groupe.

La présente invention offre ainsi une solution robuste et peu onéreuse pour obtenir un groupe d'infusion avec une forte résistance aux efforts exercés sur au moins un élément inséré en son intérieur, un tel groupe pouvant accueillir les éléments par des moyens de réception simples et efficaces ne nécessitant pas un long montage des éléments lors de leur insertion, un tel groupe étant, d'autre part, facile de fabrication et de démantèlement en fin de vie.

Un procédé selon la présente invention pour l'assemblage d'au moins un élément 32, 40, 42, 60, 66 à insérer dans un groupe 1 d'infusion comprend l'étape de montage de l'élément 32, 40, 42, 60, 66 à l'intérieur d'une ceinture 17 de renforcement encadrant l'espace intérieur du groupe 1, de telle manière que l'effort exercé sur cet élément 32, 40, 42, 60, 66 soit transmis à la ceinture 17 effectuant alors une reprise des efforts exercés sur l'élément 32, 40, 42, 60, 66.

Le procédé d'assemblage d'au moins un élément 32, 40, 42, 60, 66 à insérer dans un groupe 1 d'infusion peut aussi comprendre les étapes suivantes :
- on insère dans l'espace interne 2 du groupe 1 d'infusion les moyens d'entraînement de la demi chambre mobile 42, le cas échéant avec la demi chambre mobile 42 quand celle-ci est regroupée avec les moyens d'entraînement, ceci dans une autre position dans l'espace interne que leur position définitive,
- on coulisse les moyens d'entraînement à l'intérieur de ce groupe 1 dans leur position définitive en appui contre une face du groupe 1 et on solidarise les moyens d'entraînement avec le groupe 1,
- on insère dans l'espace interne 2 du groupe 1 d'infusion la demi chambre mobile 42, quand celle-ci n'a pas déjà été introduite avec les moyens d'entraînement,
- on insère dans l'espace interne 2 du groupe 1 d'infusion la demi chambre fixe 32 en appui sur la face opposée à celle d'appui des moyens d'entraînement, la solidarisation avec ladite face se faisant par l'arrière de la chambre fixe 32.

Avantageusement, il peut être procédé aux étapes additionnelles suivantes :
- on insère dans l'intervalle interne du groupe 1 subsistant entre chambre fixe 32, d'une part, et chambre mobile, d'autre part, un ensemble fixe 66 portant, avec liberté de coulissement par rapport à l'ensemble fixe 66, un dispositif de fermeture 60 amont et aval des demi chambres fixe 42 et mobile 32, les parties latérales dudit ensemble fixe 66 étant solidarisées avec les parties en vis à vis du groupe 1,
- on introduit les moyens de verrouillage 10 du groupe 1 par rapport à une partie constitutive 3 de la machine le recevant sur une portion externe d'un côté latéral du groupe 1, ceci par coulissement des moyens de verrouillage dans la longueur du côté,
- on superpose sur les moyens de verrouillage 10 un moyen d'actionnement 5 de telle sorte qu'un déplacement vertical du moyen d'actionnement 5 entraîne un coulissement horizontal des moyens de verrouillage 10.

L'invention n'est pas limitée aux modes de réalisation décrits mais s'étend à tout mode de réalisation conforme aux revendications.

### REFERENCES

- 1.: groupe d'infusion
- 2.: espace interne
- 3.: réceptacle
- 4.: espace interne
- 5.: poignée
- 5a.: partie d'extrémité
- 5b.: tête
- 6.: organe de préhension
- 7.: surface de préhension
- 8.: cran de sûreté
- 9.: plot
- 10.: moyens de verrouillage
- 11.: extrémité avant
- 11a.: partie faisant saillie
- 12.: couloir
- 13.: rail de coulissement
- 14.: ergot
- 15.: lumière
- 16.: rail de coulissement
- 17.: ceinture
- 18.: nervures
- 18a.: reliefs complémentaires
- 19.: connecteur
- 20.: ressort de rappel vertical
- 20a.: ressort de rappel horizontal
- 21.: montant transversal
- 21a.: ergot
- 22.: logement
- 23.: excroissance
- 32.: demi chambre fixe
- 33.: plaque de support
- 34.: évidement
- 35.: conduit d'évacuation
- 40.: corps
- 41.: portions en saillie
- 42.: demi chambre mobile
- 43.: pièce annulaire
- 60.: dispositif d'ouverture et de fermeture
- 61.: moyens de fermeture amont
- 62.: moyens de fermeture aval
- 63.: moyens d'obstruction
- 65.: bras
- 66.: ensemble fixe
- 67.: portions faisant saillie
- 68.: téton
- 69.: coulisseau
- 70.: branche
- 71.: trémie
- 72.: rail de guidage
- 73.: nervure

## Revendications

1. Groupe (1) d'infusion pour machine de production de boissons par extraction d'un produit à infuser sous forme d'une dose, ce groupe (1) formant un espace intérieur (2) creux recevant des éléments insérés (32, 40, 42, 60, 66) comprenant au moins une demi chambre mobile (42) une autre demi chambre (32) en vis à vis, ces deux demi chambres (32 et 42) en position appliquée l'une contre l'autre formant la chambre d'extraction, ainsi que des moyens d'entraînement de la demi chambre mobile (42) entre une position appliquée contre l'autre demi chambre (32) et une position à distance de cette autre demi chambre (32), **caractérisé en ce qu'**il se compose d'une ceinture (17) de renforcement délimitant son espace intérieur (2) creux, cette ceinture (17) comprenant des moyens de reprise (18) des efforts générés lors de l'infusion sur au moins un élément inséré (32, 40, 42, 60, 66), la ceinture (17) de renforcement comprenant en outre des moyens de réception (9, 13 à 16) pour chacun desdits éléments (32, 40, 42, 60, 66).

2. Groupe (1) selon la revendication 1, dans lequel les moyens de reprise des efforts sont au moins une nervure (18) de renforcement, disposée sur au moins une des faces de la ceinture (17) sur son pourtour extérieur, cette nervure (18) s'étendant dans la longueur de ladite face de la ceinture (17).

3. Groupe (1) selon l'une quelconque des revendications précédentes, dans lequel ladite autre demi chambre (32) est fixe par rapport à la ceinture (17).

4. Groupe (1) selon l'une quelconque des revendications précédentes, dans lequel, selon la fonction de leur élément inséré (32, 40, 42, 60, 66) associé, les moyens de réception peuvent être des moyens de fixation amovible, des moyens permettant le déplacement à l'intérieur du groupe (1) ou des moyens de support dudit élément (32, 40, 42, 60, 66).

5. Groupe (1) selon l'une quelconque des revendications précédentes, dans lequel les moyens d'entraînement sont regroupés dans un corps (40) présentant sur chacune de ses parties latérales deux portions en saillie (41) formant un intervalle entre elles destiné à recevoir respectivement un rail (13) de coulissement porté par l'espace intérieur (2) du groupe (1) d'infusion délimité par la ceinture (17), ces rails (13) formant les premiers moyens de réception (9, 13 à 16, 22) pour les moyens d'entraînement.

6. Groupe (1) selon la revendication précédente, dans lequel le corps comprend une pièce annulaire (43) l'entourant au moins partiellement et s'encliquetant sur chacun desdits ergots (14) et dans lequel, l'encliquetage de la pièce annulaire (43) met, de préférence, en précompression un moyen de rappel des moyens d'entraînement permettant le retour des moyens d'entraînement à partir de la position appliquée de la demi chambre mobile (42) contre l'autre demi chambre (32).

7. Groupe (1) selon l'une quelconque des deux revendications précédentes, dans lequel la demi chambre mobile (42) et ses moyens d'entraînement sont H regroupés dans le corps (40), la demi chambre mobile (42) conservant une liberté de déplacement dans la longueur de ce corps (40).

8. Groupe (1) selon l'une quelconque des revendications précédentes, dans lequel l'autre demi chambre (32) comporte sur sa face arrière, opposée à celle en vis à vis de la demi chambre mobile (42), une plaque (33) de support, cette plaque (33) comportant des évidements (34) coopérant avec des plots (9) prévus sur une face frontale intérieure de la ceinture (17) de renforcement, ces plots (9) formant les moyens de réception de la ceinture (17) pour l'autre demi chambre (32).

9. Groupe (1) selon l'une quelconque des revendications précédentes, **caractérisé en ce que** les éléments insérés (32, 40, 42, 60, 66) dans l'espace interne du groupe (1) comprennent un dispositif de fermeture (60) amont et aval des demi chambre (42, 32), ce dispositif (60) étant supporté par un ensemble fixe (66) destiné à être fixé à la ceinture (17), cet ensemble fixe (66) comportant des moyens de guidage (71) de la dose à infuser, un téton (68) étant disposé sur chaque partie latérale de l'élément fixe (66), le téton (68) étant, en position montée de cet ensemble fixe (66) dans le groupe (1) d'infusion, en vis à vis avec une excroissance (23) de la partie latérale de la ceinture (17) présentant une lumière (15) pour son insertion, ces lumières (15) formant les moyens de réception pour la fixation de l'ensemble fixe (66) sur la ceinture (17).

10. Groupe (1) selon la revendication précédente, dans lequel le dispositif de fermeture (60) est agencé pour se positionner en appui sur chacun de ses côtés latéraux, sur un renfort latéral (16) prévu sur chaque face latérale interne de la ceinture (17), ces renforts latéraux (16) étant configurés pour augmenter localement la section transversale de la ceinture.

11. Groupe (1) selon l'une quelconque des revendications précédentes, dans lequel sont prévus des moyens de verrouillage (10) du groupe (1) pour sa fixation à une partie constitutive (3) de la machine et des moyens d'actionnement du verrouillage et/ou d'insertion ou de séparation (5, 6) du groupe (1) dans la ou de la partie (3) de la machine.

12. Machine de production de boissons par extraction d'un produit à infuser, comprenant un groupe selon l'une quelconque des revendications 1 à 11.

13. Machine selon la revendication précédente, comprenant des moyens de réception (3) du groupe et un circuit hydraulique comportant une pompe et destiné à être connecté fluidiquement au groupe, la machine étant agencée de sorte que la solidarisation du groupe (1) aux moyens de réception provoque la connexion fluidique du groupe avec le circuit hydraulique et dans laquelle les moyens de réception du groupe (3) sont de préférence configurés pour permettre une désolidarisation amovible du groupe (1), et la machine est de préférence agencée de sorte que la désolidarisation du groupe (1) par rapport aux moyens de réception (3) supprime la connexion fluidique entre le groupe (1) et le circuit hydraulique.

14. Procédé d'assemblage d'au moins un élément à insérer dans un groupe (1) d'infusion selon l'une quelconque des revendications 1 à 11, **caractérisé en ce qu'**il comprend l'étape de montage de l'élément (32, 40, 42, 60, 66) à l'intérieur d'une ceinture (17) de renforcement encadrant l'espace intérieur du groupe (1), de telle manière que l'effort exercé sur cet élément (32, 40, 42, 60, 66) soit transmis à la ceinture (17) effectuant alors une reprise des efforts exercés sur l'élément (32, 40, 42, 60, 66).

15. Procédé d'assemblage d'au moins un élément (32, 40, 42, 60, 66) à insérer dans un groupe (1) d'infusion selon la revendication précédente, lequel procédé comprend les étapes suivantes :
- on insère dans l'espace interne (2) du groupe (1) d'infusion les moyens d'entraînement de la demi chambre mobile (42), le cas échéant avec la demi chambre mobile (42) quand celle-ci est regroupée avec les moyens d'entraînement, ceci dans une autre position dans l'espace interne que leur position définitive,
- on coulisse les moyens d'entraînement à l'intérieur de ce groupe (1) dans leur position définitive en appui contre une face du groupe (1) et on solidarise les moyens d'entraînement avec le groupe (1),
- on insère dans l'espace interne (2) du groupe (1) d'infusion la demi chambre mobile (42), quand celle-ci n'a pas déjà été introduite avec les moyens d'entraînement,
- on insère dans l'espace interne (2) du groupe (1) d'infusion l'autre demi chambre (32) en appui sur la face opposée à celle d'appui des moyens d'entraînement, la solidarisation avec ladite face se faisant par l'arrière de ladite autre demi chambre (32).

## Patentansprüche

1. Aufgussgruppe (1) für eine Getränkeproduktionsmaschine per Extraktion eines aufzugießenden Produkts in Form einer Dosis, wobei diese Gruppe (1) einen inneren hohlen Raum (2) bildet, der eingefügte Elemente (32, 40, 42, 60, 66) aufnimmt, umfassend wenigstens eine mobile halbe Kammer (42) und eine andere halbe Kammer (32) gegenüber, wobei diese zwei halben Kammern (32 und 42) in gegeneinander angewendeter Position die Extraktionskammer bilden, sowie Antriebsmittel der mobilen halben Kammer (42) zwischen einer gegen die andere halbe Kammer (32) angewendeten Position und einer entfernten Position dieser anderen halben Kammer (32), **dadurch gekennzeichnet, dass** sie sich aus einem Verstärkungsgürtel (17) zusammensetzt, der ihren inneren Raum (2) begrenzt, wobei dieser Gürtel (17) Erholungsmittel (18) der Kräfte umfasst, die beim Aufguss auf wenigstens einem eingefügten Element (32, 40, 42, 60, 66) generiert werden, wobei der Verstärkungsgürtel (17) darüber hinaus Aufnahmemittel (9, 13 bis 16) für jedes der genannten Elemente (32, 40, 42, 60, 66) umfasst.

2. Gruppe (1) gemäß Anspruch 1, in der die Erholungsmittel der Kräfte wenigstens eine Verstärkungsrippe (18) sind, die auf wenigstens eine der Seiten des Gürtels (17) auf seinen äußeren Umfang angewendet werden, wobei sich diese Rippe (18) in der Länge der genannten Seite des Gürtels (17) erstreckt.

3. Gruppe (1) gemäß einem der voranstehenden Ansprüche, in der die genannte andere halbe Kammer (32) im Verhältnis zum Gürtel (17) befestigt ist.

4. Gruppe (1) gemäß einem der voranstehenden Ansprüche, in der die Aufnahmemittel je nach der Funktion ihres zugeordneten eingefügten Elements (32, 40, 42, 60, 66) abnehmbare Befestigungsmittel, Mittel, die die Verschiebung im Innern der Gruppe (1) erlauben oder Stützmittel des genannten Elements (32, 40, 42, 60, 66) sein können.

5. Gruppe (1) gemäß einem der voranstehenden Ansprüche, in der die Antriebsmittel in einem Körper (40) zusammengefasst sind, die auf jedem ihrer lateralen Teile zwei hervorstehende Abschnitte (41) aufweisen, die ein Intervall untereinander bilden, das zur Aufnahme jeweils einer Gleitschiene (13) bestimmt ist, die vom inneren Raum (2) der vom Gürtel (17) begrenzten Aufgussgruppe (1) getragen wird, wobei diese Schienen (13) die ersten Aufnahmemittel (9, 13 bis 16, 22) für die Antriebsmittel bilden.

6. Gruppe (1) gemäß dem voranstehenden Anspruch, in der der Körper ein ringförmiges Teil (43) umfasst, das sie wenigstens teilweise umfasst und auf jedem der genannten Nocken (14) einrastet und in den das Einrasten des ringförmigen Teils (43) bevorzugt ein Rückholmittel der Antriebsmittel, das die Rückkehr der Antriebsmittel ausgehend von der angewendeten Position der mobilen halben Kammer (42) gegen die andere halbe Kammer (32) in Vorverdichtung bringt.

7. Gruppe (1) gemäß einem der zwei voranstehenden Ansprüche, in der die mobile halbe Kammer (42) und ihre Antriebsmittel in dem Körper (40) zusammengefasst sind, wobei die mobile halbe Kammer (42) eine Verschiebungsfreiheit in der Länge dieses Körpers (40) beibehält.

8. Gruppe (1) gemäß einem der voranstehenden Ansprüche, in der die andere halbe Kammer (32) auf ihrer hinteren Seite, die der der mobilen halben Kammer (42) gegenüber liegt, eine Stützplatte (33) umfasst, wobei diese Platte (33) Ausnehmungen (34) umfasst, die mit Kontakten (9) zusammenwirken, die auf einer vorderen internen Seite des Verstärkungsgürtels (17) vorgesehen sind, wobei diese Kontakt (9) Aufnahmemittel des Gürtels (17) für die andere halbe Kammer (32) bilden.

9. Gruppe (1) gemäß einem der voranstehenden Ansprüche, **dadurch gekennzeichnet, dass** die in den internen Raum der Gruppe (1) eingefügten Elemente (32, 40, 42, 60, 66) eine vorgeschaltete und nachgeschaltete Verschlussvorrichtung (60) der halben Kammern (42, 32) umfassen, wobei diese Vorrichtung (60) durch eine fixierte Gruppe (60) gestützt wird, die zur Befestigung am Gürtel (17) bestimmt ist, wobei diese fixierte Gruppe (66) Führungsmittel (17) der aufzugießenden Dosis umfasst, wobei ein Nippel (68) auf jedem lateralen Teil des fixierten Elements (66) angeordnet ist, wobei der Nippel (68) in montierter Position dieser fixierten Gruppe (66) in der Aufgussgruppe (1) gegenüber mit einer Ausbuchtung (23) des lateralen Teils des Gürtels (17), der eine Öffnung (15) für sein Einfügen aufweist, montiert ist, wobei diese Öffnungen (15) Aufnahmemittel für die Fixierung der auf dem Gürtel (17) fixierten Gruppe (66) bilden.

10. Gruppe (1) gemäß dem voranstehenden Anspruch, in der die Verschlussvorrichtung (60) angeordnet ist, um sich aufstützend auf jede ihrer lateralen Seiten auf einer lateralen Verstärkung (16), die auf jeder internen lateralen Seite des Gürtels (17) vorgesehen ist, zu positionieren, wobei diese lateralen Verstärkungen (16) konfiguriert sind, um lokal den transversalen Querschnitt des Gürtels zu erhöhen.

11. Gruppe (1) gemäß einem der voranstehenden Ansprüche, in der Verriegelungsmittel (10) der Gruppe (1) für ihre Befestigung an einem Bestandteil (3) der Maschine und Betätigungsmittel der Verriegelung und / oder Einfügeoder Trennmittel (5, 6) der Gruppe (1) in in dem oder von dem Teil (3) der Maschine vorgesehen sind.

12. Produktionsmaschine von Getränken per Extraktion eines aufzugießenden Produkts, umfassend eine Gruppe gemäß Anspruch 1 bis 11.

13. Maschine gemäß dem voranstehenden Anspruch, umfassend Aufnahmemittel (3) der Gruppe und einen hydraulischen Kreislauf, umfassend eine Pumpe, die zum fluidischen Anschluss an die Gruppe bestimmt ist, wobei die Maschine derart angeordnet ist, dass die feste Befestigung der Gruppe (1) an die Aufnahmemittel den fluidischen Anschluss der Gruppe mit dem hydraulischen Kreislauf hervorruft und in der die Aufnahmemittel der Gruppe (3) bevorzugt konfiguriert sind, um eine abnehmbare Loslösung der Gruppe (1) zu erlauben, und die Maschine bevorzugt derart angeordnet ist, dass die Loslösung der Gruppe (1) im Verhältnis zu den Aufnahmemitteln (3) den fluidischen Anschluss zwischen der Gruppe (1) und dem hydraulischen Kreislauf aufhebt.

14. Montageverfahren wenigstens eines in eine Aufgussgruppe (1) gemäß Anspruch 1 bis 11 einzuführenden Elements, **dadurch gekennzeichnet, dass** es die Montagestufe des Elements (32, 40, 42, 60, 66) im Innern eines Verstärkungsgürtels (17) umfasst, der den inneren Raum der Gruppe (1) derart einrahmt, dass die auf dieses Element (32, 40, 42, 60, 66) ausgeübte Kraft auf den Gürtel (17) übertragen wird und dann eine Erholung der auf das Element (32, 40, 42, 60, 66) ausgeübten Kräfte ausführt.

15. Montageverfahren wenigstens eines in eine Aufgussgruppe (1) einzuführenden Elements (32, 40, 42, 60, 66) gemäß dem voranstehenden Anspruch, wobei das genannte Verfahren die folgenden Stufen umfasst:
- in den inneren Raum (2) der Aufgussgruppe (1) werden die Antriebsmittel der mobilen halben Kammer (42) eingefügt, ggf. mit der halben mobilen Kammer (42), wenn diese mit den Antriebsmitteln zusammengefasst sind, und zwar in einer anderen Position in dem inneren Raum als ihrer endgültigen Position,
- die Antriebsmittel werden in das Innere dieser Gruppe (1) in ihre endgültige Position aufstützend gegen eine Seite der Gruppe (1) geschoben, und die Antriebsmittel werden mit der Gruppe (1) fest befestigt,
- in den internen Raum (2) der Aufgussgruppe (1) wird die mobile halbe Kammer (42) eingefügt, wenn diese nicht bereits mit den Antriebsmitteln eingeführt worden ist,
- in den inneren Raum (2) der Aufgussgruppe (1) wird die andere halbe Kammer (32) aufstützend auf der Seite eingefügt, die der Stützseite der Antriebsmittel gegenüber liegt, wobei die feste Befestigung der genannten Seite von der Rückseite der genannten anderen halben Kammer (32) erfolgt.

## Claims

1. An infusion unit (1) for a machine for making beverages by means of the extraction of a product to be infused in the form of a dose, said unit (1) forming a hollow inner space (2) that receives inserted elements (32, 40, 42, 60, 66) including at least one mobile half-chamber (42), another half-chamber (32) opposite, said two half-chambers (32 and 42) in a position applied one against the other forming the extraction chamber, as well as driving means for the mobile half-chamber (42) between a position applied against the other half-chamber (32) and a position at a distance from said other half-chamber (32), **characterised in that** it consists of a reinforcement belt (17) defining the hollow inner space (2) of the infusion unit, said belt (17) including means for taking up (18) the forces generated while infusing on at least one inserted element (32, 40, 42, 60, 66), the reinforcement belt (17) further including receiving means (9, 13 to 16) for each of said elements (32, 40, 42, 60, 66).

2. A unit (1) according to claim 1, wherein the means for taking up the forces are at least one reinforcement rib (18), arranged on at least one of the faces of the belt (17) on the outer perimeter thereof, said rib (18) extending lengthwise of said face of the belt (17).

3. A unit (1) according to any one of the preceding claims, wherein said other half-chamber (32) is fixed in relation to the belt (17).

4. A unit (1) according to any one of the preceding claims, wherein, according to the function of the associated inserted element (32, 40, 42, 60, 66) thereof, the receiving means may be removable attachment means, means enabling the movement inside the unit (1) or support means of said element (32, 40, 42, 60, 66).

5. A unit (1) according to any one of the preceding claims, wherein the driving means are grouped in a body (40) having on each of the lateral portions thereof two projecting portions (41) forming a gap between them intended to respectively receive a sliding rail (13) supported by the inner space (2) of the infusion unit (1) defined by the belt (17), said rails (13) forming the first receiving means (9, 13 to 16, 22) for the driving means.

6. A unit (1) according to the preceding claim, wherein the body includes a ring-shaped component (43) surrounding said body at least partially and snapping onto each of said lugs (14) and wherein the snapping-on of the ring-shaped component (43) pre-compresses a return means for the driving means enabling the driving means to be returned from the applied position of the mobile half-chamber (42) against the other half-chamber (32).

7. A unit (1) according to any one of the two preceding claims, wherein the mobile half-chamber (42) the driving means thereof are grouped in the body (40), the mobile half-chamber (42) maintaining a freedom of movement lengthwise of said body (40).

8. A unit (1) according to any one of the preceding claims, wherein the other half-chamber (32) comprises on the rear face thereof, opposite that facing the mobile half-chamber (42), a support plate (33), said plate (33) comprising recesses (34) engaging with studs (9) provided on an inner front face of the reinforcement belt (17), said studs (9) forming the receiving means of the belt (17) for the fixed half-chamber (32).

9. A unit (1) according to any one of the preceding claims, **characterised in that** the inserted elements (32, 40, 42, 60, 66) in the inner space of the unit (1) include a closing device (60) upstream and downstream of the half-chambers (42, 32), said device (60) being supported by a fixed assembly (66) intended to be attached to the belt (17), said fixed assembly (66) comprising means for guiding (71) the dose to be infused, a pin (68) being arranged on each lateral portion of the fixed element (66), the pin (68) being, in mounted position of said fixed assembly (66) in the infusion unit (1), facing a protrusion (23) of the lateral portion of the belt (17) having an aperture (15) for the insertion thereof, said apertures (15) forming the receiving means for the attachment of the fixed assembly (66) onto the belt (17).

10. A unit (1) according to the preceding claim, wherein the closing device (60) is arranged to be positioned resting on each of the lateral sides thereof, on a lateral reinforcement (16) provided on each inner lateral face of the belt (17), said lateral reinforcements (16) being configured to locally increase the section of the belt.

11. A unit (1) according to any one of the preceding claims, wherein are provided locking means (10) of the unit (1) for the attachment thereof to a component part (3) of the machine and actuation means for the locking and/or insertion or separation (5, 6) of the unit (1) into or from the part (3) of the machine.

12. A machine for making beverages by means of the extraction of a product to be infused, including a unit according to any one of claims 1 to 11.

13. A machine according to the preceding claim, including receiving means (3) of the unit and a hydraulic circuit comprising a pump and intended to be fluidly connected to the unit, the machine being arranged such that the rigid connection of the unit (1) to the receiving means causes the fluidic connection of the unit to the hydraulic circuit and, wherein the receiving means (3) of the unit are preferably configured to enable removable disconnection of the unit (1), and the machine is preferably arranged such that the disconnection of the unit (1) from the receiving means (3) eliminates the fluidic connection between the unit (1) and the hydraulic circuit.

14. A method for assembling at least one element to be inserted into an infusion unit (1) according to any one of claims 1 to 11, **characterised in that** it includes the step for mounting the element (32, 40, 42, 60, 66) inside a reinforcement belt (17) flanking the inner space of the unit (1), such that the force exerted on said element (32, 40, 42, 60, 66) is transmitted to the belt (17) therefore taking up the forces exerted on the element (32, 40, 42, 60, 66).

15. A method for assembling at least one element (32, 40, 42, 60, 66) to be inserted into an infusion unit (1) according to the preceding claim, wherein the method includes the following steps:
- the driving means of the mobile half-chamber (42) are inserted into the inner space (2) of the infusion unit (1), where applicable with the mobile half-chamber (42) when said half-chamber is grouped with the driving means, this in a position in the inner space other than the final position thereof,
- the driving means are slid inside said unit (1) in the final position thereof resting against a face of the unit (1) and the driving means are rigidly connected to the unit (1),
- the mobile half-chamber (42) is inserted into the inner space (2) of the infusion unit (1), when said mobile half-chamber has not already been inserted with the driving means,
- the other half-chamber (32), resting on the face opposite said support face of the driving means, is inserted into the inner space (2) of the infusion unit (1), the rigid connection with said face being carried out via the rear of said other half-chamber (32).
